# EUROPEAN PATENT APPLICATION

(11) **EP 4 415 458 A1**
(43) Date of publication of application: **14.08.2024**
(21) Application number: 22897544.7
(22) Date of filing: 28.10.2022
(51) Int. Cl.: H04W 72/04

(54) **RESOURCE ALLOCATION METHOD IN DUAL WIFI MODE, AND DEVICE AND STORAGE MEDIUM**

(30) Priority: 29.11.2021 CN 202111448207
(71) Applicant: Huawei Technologies Co., Ltd., Shenzhen, Guangdong 518129 (CN)
(72) Inventor: ZHANG, Li, Shenzhen, Guangdong 518129 (CN); YANG, Jianhua, Shenzhen, Guangdong 518129 (CN); MENG, Meng, Shenzhen, Guangdong 518129 (CN); YANG, Ming, Shenzhen, Guangdong 518129 (CN)
(74) Representative: Maiwald GmbH
(86) International application number: PCT/CN2022/128345
(87) International publication number: WO 2023/093461

(57) **Abstract**

Embodiments of this application relate to the field of communication technologies, and provide a resource allocation method in a Wi-Fi dual mode, a device, and a storage medium. The method is applied to an electronic device that uses a Wi-Fi direct mode and a STA mode to perform DBAC multiplexing. The resource allocation method in the Wi-Fi dual mode includes: first determining a first synchronization slot and a second synchronization slot in a scheduling period of the Wi-Fi direct mode, and then determining a first data slot and a second data slot, where the first synchronization slot is used for time synchronization in the Wi-Fi direct mode, time corresponding to the second synchronization slot is used for time synchronization in the STA mode, the first data slot is used for data transmission in the Wi-Fi direct mode, and time corresponding to the second data slot is used for data transmission in the STA mode. The synchronization slot is first determined, and then the data slot is determined, so that transmission resource allocation is implemented when the electronic device uses the STA mode and the Wi-Fi direct mode to perform DBAC multiplexing.

## Description

This application claims priority to Chinese Patent Application No. 202111448207.1, filed with the China National Intellectual Property Administration on November 29, 2021 and entitled "RESOURCE ALLOCATION METHOD IN WI-FI DUAL MODE, DEVICE, AND STORAGE MEDIUM", which is incorporated herein by reference in its entirety.

### TECHNICAL FIELD

Embodiments of this application relate to the field of communication technologies, and in particular, to a resource allocation method in a Wi-Fi dual mode, a device, and a storage medium.

### BACKGROUND

The wireless fidelity (wireless fidelity, Wi-Fi) technology is a widely used wireless network transmission technology. With the development of the Wi-Fi technology and the terminal technology, Wi-Fi is increasingly used in various scenarios, for example, interconnection and interworking between a plurality of devices. In this scenario, a plurality of terminals are connected for collaboration, and service data is transmitted on the plurality of terminal devices. Therefore, collaborative applications and services, such as multi-screen collaboration and information sharing, of the plurality of devices can be supported.

In a scenario of interconnection and interworking between a plurality of devices, a terminal usually works in a plurality of types of Wi-Fi modes, for example, a wireless station (station, STA) mode and a Wi-Fi direct mode. How to configure a transmission resource when the terminal works in the STA mode and the Wi-Fi direct mode needs to be resolved urgently.

### SUMMARY

Embodiments of this application provide a resource allocation method in a Wi-Fi dual mode, a device, and a storage medium, to implement transmission resource allocation when an electronic device uses a STA mode and a Wi-Fi direct mode to perform DBAC multiplexing.

According to a first aspect, an embodiment of this application provides a resource allocation method in a Wi-Fi dual mode, applied to a first electronic device, where the first electronic device uses a Wi-Fi direct mode and a STA mode to perform DBAC multiplexing, and the method includes: determining a first synchronization slot and a second synchronization slot in a plurality of slots included in a scheduling period of the Wi-Fi direct mode, where the slot is a time unit of the Wi-Fi direct mode, the first synchronization slot is used for time synchronization of the first electronic device in the Wi-Fi direct mode, and time corresponding to the second synchronization slot is used for time synchronization of the first electronic device in the STA mode; and determining a first data slot and a second data slot in remaining slots, where the remaining slots are slots other than the first synchronization slot and the second synchronization slot in the plurality of slots, the first data slot is used for data transmission of the first electronic device in the Wi-Fi direct mode, and time corresponding to the second data slot is used for data transmission of the first electronic device in the STA mode.

The resource allocation method in the Wi-Fi dual mode provided in the first aspect is applicable to a scenario in which the electronic device uses the STA mode and a HiD2D mode to perform DBAC multiplexing. In a scheduling period of the HiD2D mode, the first synchronization slot and the second synchronization slot are first determined. The first synchronization slot ensures time synchronization when the electronic device communicates with another device in the HiD2D mode, and the second synchronization slot ensures time synchronization when the electronic device communicates with another device in the STA mode. Then, the first data slot and the second data slot that are used for data transmission are determined. A slot used for synchronization is first determined in a scheduling period, and then a slot used for data transmission is determined. When different slot structures are used in the STA mode and the HiD2D mode, resource allocation is implemented when the electronic device uses the STA mode and the HiD2D mode to perform DBAC multiplexing, so that the electronic device simultaneously performs Wi-Fi communication with a plurality of devices, and a requirement of a distributed service is met.

In a possible implementation, the determining a first synchronization slot and a second synchronization slot in a plurality of slots included in a scheduling period of the Wi-Fi direct mode includes: determining the first synchronization slot in the plurality of slots; obtaining offset time, where the offset time indicates a minimum time interval between a reference slot in the first synchronization slot and a start point of a beacon frame of the STA mode; and determining the second synchronization slot in the plurality of slots based on the reference slot, the offset time, and a beacon period of the beacon frame, where the second synchronization slot is a slot to which the start point of the beacon frame belongs.

In this implementation, locations of the first synchronization slot and the second synchronization slot in the scheduling period are flexible by setting the offset time.

In a possible implementation, the first synchronization slot includes first T slots in the plurality of slots, the reference slot is the 1^{st} slot in the first T slots, and T is a positive integer.

In a possible implementation, the determining the second synchronization slot in the plurality of slots based on the reference slot, the offset time, and a beacon period of the beacon frame includes: determining the 1^{st} second synchronization slot after the reference slot in the plurality of slots based on the reference slot and the offset time; and continuing to determine the second synchronization slot in the plurality of slots based on the 1^{st} second synchronization slot and the beacon period.

In a possible implementation, the resource allocation method in the Wi-Fi dual mode further includes: determining whether a beacon frame sent by an AP is received within the time corresponding to the second synchronization slot; and if no beacon frame sent by the AP is received within the time corresponding to the second synchronization slot, and no beacon frame sent by the AP is received within time corresponding to a preset quantity of consecutive second synchronization slots, switching from using the Wi-Fi direct mode and the STA mode to using the STA mode to perform DBAC multiplexing.

In this implementation, if a quantity of the beacon frames sent by the AP that the electronic device continuously fails to receive reaches a preset quantity, forcible synchronization of the beacon frames may be triggered. In other words, the electronic device switches from using the HiD2D mode and the STA mode to using the STA mode to perform DBAC multiplexing, and waits for receiving the beacon frame, to ensure that the electronic device can successfully receive the beacon frame.

In a possible implementation, the resource allocation method in the Wi-Fi dual mode further includes: if no beacon frame sent by the AP is received within preset duration after the STA mode is used, switching from using the STA mode to using the Wi-Fi direct mode.

In this implementation, if the electronic device still cannot receive the beacon frame after the forcible synchronization of the beacon frames is performed, it may be determined that a STA is disconnected, and the electronic device switches from only using the STA mode to only using the HiD2D mode, to ensure that the electronic device can use the HiD2D mode to perform a service.

In a possible implementation, preset duration=guard duration+beacon period of a beacon frame*I, where I is a positive integer.

In a possible implementation, the determining a first data slot and a second data slot in remaining slots includes: obtaining a ratio of a quantity of first data slots to a quantity of second data slots; and determining the first data slot and the second data slot in the remaining slots based on the ratio of the slot quantities.

In this implementation, the remaining slots are allocated to the HiD2D mode and the STA mode in a static allocation manner based on a preset proportion. This implementation is simple.

In a possible implementation, the determining a first data slot and a second data slot in remaining slots includes: determining a quantity M of slots required when data transmission is performed by using only the Wi-Fi direct mode, and a quantity N of slots corresponding to time required when data transmission is performed by using only the STA mode, where both M and N are positive integers; and determining the first data slot and the second data slot in the remaining slots based on M and N.

In this implementation, the first data slot and the second data slot are determined in the remaining slots in a dynamic allocation manner. First, the quantity M of slots required when only the HiD2D mode is used and the quantity N of slots required when only the STA mode is used are separately predicted, and then coordinated allocation is performed based on M, N, and a quantity of the remaining slots. Accuracy of determining the first data slot and the second data slot is improved for consideration of an actual service volume requirement.

In a possible implementation, the determining the first data slot and the second data slot in the remaining slots based on M and N includes: if M+N≤the quantity of the remaining slots, determining M slots in the remaining slots as the first data slot, and determining N slots other than the M slots in the remaining slots as the second data slot.

In this implementation, the remaining slots may meet data transmission requirements of the electronic device in the HiD2D mode and the STA mode, and there is no resource allocation conflict. The M slots may be allocated to the HiD2D mode, and the N slots may be allocated to the STA mode.

In a possible implementation, if M+N<the quantity of the remaining slots, the resource allocation method in the Wi-Fi dual mode further includes: determining slots other than the M slots and the N slots in the remaining slots as the first data slot or the second data slot.

In a possible implementation, the determining the first data slot and the second data slot in the remaining slots based on M and N includes: if M+N>the quantity of the remaining slots, determining the first data slot and the second data slot in the remaining slots based on a preset scheduling rule, where the preset scheduling rule includes any one of the following: SP scheduling, RR scheduling, or WRR scheduling.

In this implementation, the remaining slots cannot meet the data transmission requirements of the electronic device in the HiD2D mode and the STA mode, and there is a resource allocation conflict. The slots may be allocated to the HiD2D mode and the STA mode based on the SP scheduling, the RR scheduling, or the WRR scheduling.

In a possible implementation, the preset scheduling rule includes the SP scheduling, and the determining the first data slot and the second data slot in the remaining slots based on a preset scheduling rule includes: determining M slots in the remaining slots as the first data slot, and determining slots other than the M slots in the remaining slots as the second data slot; or determining N slots in the remaining slots as the second data slot, and determining slots other than the N slots in the remaining slots as the first data slot.

In this implementation, the SP scheduling rule may be used to meet the data transmission requirement in the HiD2D mode, or meet the data transmission requirement in the STA mode.

In a possible implementation, the preset scheduling rule includes the RR scheduling, and the determining the first data slot and the second data slot in the remaining slots based on a preset scheduling rule includes: determining M-(M+N-K)/2 slots in the remaining slots as the first data slot, and determining slots other than the M-(M+N-K)/2 slots in the remaining slots as the second data slot, where K is the quantity of the remaining slots.

In this implementation, the RR scheduling rule is used to fairly reduce a quantity of data slots required for the HiD2D mode and a quantity of data slots required for the STA mode, to avoid a large rate fluctuation caused to data transmission in the HiD2D mode and the STA mode.

In a possible implementation, the preset scheduling rule includes the WRR scheduling, and the determining the first data slot and the second data slot in the remaining slots based on a preset scheduling rule includes: determining M-(M+N-K)*q slots in the remaining slots as the first data slot, and determining slots other than the M-(M+N-K)*q slots in the remaining slots as the second data slot, where K is the quantity of the remaining slots, and 0<q<1.

In this implementation, the WRR scheduling rule is used to reduce, based on weights, a quantity of data slots required for the HiD2D mode and a quantity of data slots required for the STA mode, to avoid a large rate fluctuation caused to data transmission in the HiD2D mode and the STA mode.

In a possible implementation, the first electronic device uses the Wi-Fi direct mode to perform a first service with a second electronic device, and the first electronic device initiates the first service; the second electronic device uses the Wi-Fi direct mode and the STA mode to perform DBAC multiplexing; and the resource allocation method in the Wi-Fi dual mode further includes: sending first slot configuration information to the second electronic device, where the first slot configuration information indicates locations of the first data slot and the second data slot in the scheduling period.

This implementation is applicable to a dual-device DBAC scenario, and two devices that communicate with each other both use the Wi-Fi direct mode and the STA mode to perform DBAC multiplexing, and access a same AP. In this scenario, a service initiator may determine a resource allocation result between the two devices.

In a possible implementation, the first electronic device uses the Wi-Fi direct mode to separately connect to a second electronic device and a third electronic device; both the second electronic device and the third electronic device use the Wi-Fi direct mode and the STA mode to perform DBAC multiplexing; and the determining a first data slot and a second data slot in remaining slots includes: obtaining first slot configuration information between the first electronic device and the second electronic device and second slot configuration information between the first electronic device and the third electronic device, where the first slot configuration information indicates locations of the first data slot and the second data slot in the scheduling period when the first electronic device communicates with the second electronic device, and the second slot configuration information indicates locations of the first data slot and the second data slot in the scheduling period when the first electronic device communicates with the third electronic device; and determining the first data slot and the second data slot in the remaining slots based on the first slot configuration information and the second slot configuration information.

This implementation is applicable to a DBAC scenario with more than three devices, and at least three devices that communicate with each other all use the Wi-Fi direct mode and the STA mode to perform DBAC multiplexing, and access a same AP. In this scenario, for each device, the electronic device may first obtain a resource scheduling result between the electronic device and another device based on the method in the dual-device DBAC scenario, and then determine a final resource scheduling result based on a plurality of resource scheduling results.

According to a second aspect, an embodiment of this application provides a resource allocation apparatus in a Wi-Fi dual mode, applied to a first electronic device, where the first electronic device uses a Wi-Fi direct mode and a STA mode to perform DBAC multiplexing, and the apparatus includes: a first determining module, configured to determine a first synchronization slot and a second synchronization slot in a plurality of slots included in a scheduling period of the Wi-Fi direct mode, where the slot is a time unit of the Wi-Fi direct mode, the first synchronization slot is used for time synchronization of the first electronic device in the Wi-Fi direct mode, and time corresponding to the second synchronization slot is used for time synchronization of the first electronic device in the STA mode; and a second determining module, configured to determine a first data slot and a second data slot in remaining slots, where the remaining slots are slots other than the first synchronization slot and the second synchronization slot in the plurality of slots, the first data slot is used for data transmission of the first electronic device in the Wi-Fi direct mode, and time corresponding to the second data slot is used for data transmission of the first electronic device in the STA mode.

In a possible implementation, the first determining module is configured to: determine the first synchronization slot in the plurality of slots; obtain offset time, where the offset time indicates a minimum time interval between a reference slot in the first synchronization slot and a start point of a beacon frame of the STA mode; and determine the second synchronization slot in the plurality of slots based on the reference slot, the offset time, and a beacon period of the beacon frame, where the second synchronization slot is a slot to which the start point of the beacon frame belongs.

In a possible implementation, the first synchronization slot includes first T slots in the plurality of slots, the reference slot is the 1^{st} slot in the first T slots, and T is a positive integer.

In a possible implementation, the first determining module is configured to: determine the 1^{st} second synchronization slot after the reference slot in the plurality of slots based on the reference slot and the offset time; and continue to determine the second synchronization slot in the plurality of slots based on the 1^{st} second synchronization slot and the beacon period.

In a possible implementation, a switching module is further included, and the switching module is configured to: determine whether a beacon frame sent by an AP is received within the time corresponding to the second synchronization slot; and if no beacon frame sent by the AP is received within the time corresponding to the second synchronization slot, and no beacon frame sent by the AP is received within time corresponding to a preset quantity of consecutive second synchronization slots, switch from using the Wi-Fi direct mode and the STA mode to using the STA mode to perform DBAC multiplexing.

In a possible implementation, the switching module is further configured to: if no beacon frame sent by the AP is received within preset duration after the STA mode is used, switch from using the STA mode to using the Wi-Fi direct mode.

In a possible implementation, preset duration=guard duration+beacon period of a beacon frame*I, where I is a positive integer.

In a possible implementation, the second determining module is configured to: obtain a ratio of a quantity of first data slots to a quantity of second data slots; and determine the first data slot and the second data slot in the remaining slots based on the ratio of the slot quantities.

In a possible implementation, the second determining module is configured to: determine a quantity M of slots required when data transmission is performed by using only the Wi-Fi direct mode, and a quantity N of slots corresponding to time required when data transmission is performed by using only the STAmode, where both M and N are positive integers; and determine the first data slot and the second data slot in the remaining slots based on M and N.

In a possible implementation, the second determining module is configured to: if M+N≤a quantity of the remaining slots, determine M slots in the remaining slots as the first data slot, and determine N slots other than the M slots in the remaining slots as the second data slot.

In a possible implementation, if M+N<a quantity of the remaining slots, the second determining module is configured to: determine slots other than the M slots and the N slots in the remaining slots as the first data slot or the second data slot.

In a possible implementation, the second determining module is configured to: if M+N>a quantity of the remaining slots, determine the first data slot and the second data slot in the remaining slots based on a preset scheduling rule, where the preset scheduling rule includes any one of the following: SP scheduling, RR scheduling, or WRR scheduling.

In a possible implementation, the preset scheduling rule includes the SP scheduling, and the second determining module is configured to: determine M slots in the remaining slots as the first data slot, and determine slots other than the M slots in the remaining slots as the second data slot; or determine N slots in the remaining slots as the second data slot, and determine slots other than the N slots in the remaining slots as the first data slot.

In a possible implementation, the preset scheduling rule includes the RR scheduling, and the second determining module is configured to: determine M-(M+N-K)/2 slots in the remaining slots as the first data slot, and determine slots other than the M-(M+N-K)/2 slots in the remaining slots as the second data slot, where K is the quantity of the remaining slots.

In a possible implementation, the preset scheduling rule includes the WRR scheduling, and the second determining module is configured to: determine M-(M+N-K)*q slots in the remaining slots as the first data slot, and determine slots other than the M-(M+N-K)*q slots in the remaining slots as the second data slot, where K is the quantity of the remaining slots, and 0<q<1.

In a possible implementation, the first electronic device uses the Wi-Fi direct mode to perform a first service with a second electronic device, and the first electronic device initiates the first service; and the second electronic device uses the Wi-Fi direct mode and the STA mode to perform DBAC multiplexing, and further includes a sending module, where the sending module is configured to: send first slot configuration information to the second electronic device, where the first slot configuration information indicates locations of the first data slot and the second data slot in the scheduling period.

In a possible implementation, the first electronic device uses the Wi-Fi direct mode to separately connect to a second electronic device and a third electronic device; both the second electronic device and the third electronic device use the Wi-Fi direct mode and the STA mode to perform DBAC multiplexing; and the second determining module is configured to: obtain first slot configuration information between the first electronic device and the second electronic device and second slot configuration information between the first electronic device and the third electronic device, where the first slot configuration information indicates locations of the first data slot and the second data slot in the scheduling period when the first electronic device communicates with the second electronic device, and the second slot configuration information indicates locations of the first data slot and the second data slot in the scheduling period when the first electronic device communicates with the third electronic device; and determine the first data slot and the second data slot in the remaining slots based on the first slot configuration information and the second slot configuration information.

According to a third aspect, an electronic device is provided, including a processor. The processor is configured to: be coupled to a memory, read instructions in the memory, and enable, based on the instructions, the electronic device to perform the method provided in the first aspect.

According to a fourth aspect, a computer-readable storage medium is provided. The computer-readable storage medium stores instructions, and when the instructions are run on a computer or a processor, the method provided in the first aspect is implemented.

According to a fifth aspect, a program product is provided. The program product includes a computer program, the computer program is stored in a readable storage medium, at least one processor of an electronic device may read the computer program from the readable storage medium, and the at least one processor executes the computer program to enable the electronic device to implement the method provided in the first aspect.

### BRIEF DESCRIPTION OF DRAWINGS

FIG. 1 is a schematic diagram of a scenario in which an AP communicates with STAs according to an embodiment of this application;
FIG. 2 is a schematic diagram of broadcasting a beacon frame by an AP according to an embodiment of this application;
FIG. 3 is a schematic diagram of a scenario in which electronic devices use a P2P mode to communicate according to an embodiment of this application;
FIG. 4 is a schematic diagram of a scenario in which an electronic device uses a STA mode and a P2P mode to perform DBAC multiplexing according to an embodiment of this application;
FIG. 5 is a schematic diagram of a working principle of the DBAC multiplexing in FIG. 4;
FIG. 6 is a schematic diagram of slot allocation when an electronic device uses a STA mode and a P2P mode to perform DBAC multiplexing according to an embodiment of this application;
FIG. 7 is a schematic diagram of a scenario of interconnection and interworking between a plurality of devices according to an embodiment of this application;
FIG. 8A and FIG. 8B are schematic diagrams of a group of scenarios in which electronic devices use a STA mode and a HiD2D mode to perform DBAC multiplexing according to an embodiment of this application;
FIG. 9A and FIG. 9B are schematic diagrams of another group of scenarios in which electronic devices use a STA mode and a HiD2D mode to perform DBAC multiplexing according to an embodiment of this application;
FIG. 10 is a schematic diagram of another scenario in which electronic devices use a STA mode and a HiD2D mode to perform DBAC multiplexing according to an embodiment of this application;
FIG. 11 is a schematic diagram of a slot structure and a slot control bitmap in a HiD2D mode according to an embodiment of this application;
FIG. 12 is a schematic diagram of a first synchronization slot and a second synchronization slot according to an embodiment of this application;
FIG. 13 is another schematic diagram of a first synchronization slot and a second synchronization slot according to an embodiment of this application;
FIG. 14 is a flowchart of a resource allocation method in a Wi-Fi dual mode according to an embodiment of this application;
FIG. 15 is a schematic diagram of a first data slot and a second data slot according to an embodiment of this application;
FIG. 16 is another schematic diagram of a first data slot and a second data slot according to an embodiment of this application;
FIG. 17 is still another schematic diagram of a first data slot and a second data slot according to an embodiment of this application;
FIG. 18 is still another schematic diagram of a first data slot and a second data slot according to an embodiment of this application;
FIG. 19 is still another schematic diagram of a first data slot and a second data slot according to an embodiment of this application;
FIG. 20 is a schematic diagram of a structure of a resource allocation apparatus in a Wi-Fi dual mode according to an embodiment of this application; and
FIG. 21 is a schematic diagram of a structure of an electronic device according to an embodiment of this application.

### DESCRIPTION OF EMBODIMENTS

The following describes embodiments of this application with reference to accompanying drawings.

A resource allocation method in a Wi-Fi dual mode provided in embodiments of this application is applied to a scenario in which an electronic device uses the Wi-Fi dual mode to perform dual band adaptive concurrent (dual band adaptive concurrent, DBAC) multiplexing. The Wi-Fi dual mode refers to two different Wi-Fi working modes.

A name and a type of the electronic device are not limited in embodiments of this application. For example, the electronic device is also referred to as a terminal, a terminal device, user equipment, a mobile terminal, a Wi-Fi device, or the like, and may perform Wi-Fi communication. Currently, for example, the electronic device is a mobile phone, a tablet computer, a notebook computer, a palmtop computer, a personal computer, a smart speaker, a wearable device, a virtual reality (virtual reality, VR) device, an augmented reality (augmented reality, AR) device, a mobile Internet device (mobile internet device, MID), or a device in a smart home (smart home).

For ease of description, an example in which the electronic device is a mobile phone is used in embodiments of this application.

The following describes related concepts in embodiments of this application.

### 1. Access point (access point, AP) mode, STA mode, beacon (Beacon) frame, and beacon (Beacon) period

The Institute of Electrical and Electronics Engineers (institute of electrical and electronics engineers, IEEE) 802.11 protocol defines two working modes: an AP mode and a STA mode.

An AP is a creator of a wireless network, and is a central node of the wireless network, for example, a router, a wireless gateway, or a wireless bridge. An electronic device connected to a wireless network is referred to as a STA station or a STA, for example, a mobile phone or a computer. The AP works in an AP mode and provides wireless access services and data access for the STA. The STA works in a STA mode and accesses data by connecting to the AP. The STA does not accept wireless access from another device. APs can be connected to each other, but STAs cannot be directly connected to each other. A wireless network formed by an AP and a STA is a centralized network communication structure centered on the AP.

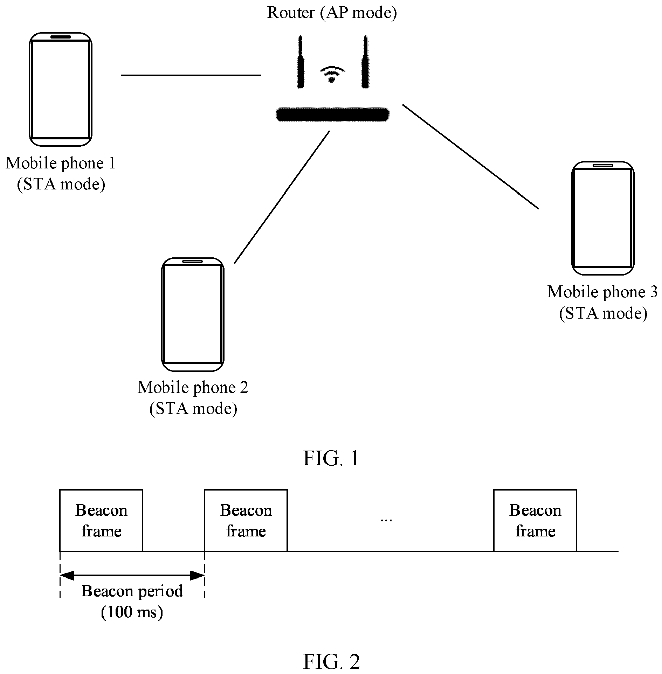

For example, FIG. 1 is a schematic diagram of a scenario in which an AP communicates with a STA according to an embodiment of this application. As shown in FIG. 1, a router serves as the AP and works in an AP mode. A mobile phone 1, a mobile phone 2, and a mobile phone 3 all serve as STAs, are separately connected to the router, and work in a STA mode. Direct Wi-Fi communication cannot be performed between the mobile phone 1 and the mobile phone 2, between the mobile phone 1 and the mobile phone 3, and between the mobile phone 2 and the mobile phone 3.

A service performed by the STA is not limited in embodiments of this application, for example, an Internet access service, including but not limited to web page browsing, chatting, email receiving and sending, or video calling.

The IEEE 802.11 protocol specifies a plurality of types of frame structures, for example, a beacon (Beacon) frame, a probe request (Probe Request) frame, a probe response (Probe Response) frame, and a data (Data) frame.
(1) Beacon frame: An AP periodically broadcasts the beacon frame to enable a surrounding STA or AP to discover the AP. Correspondingly, the STA listens to the beacon frame broadcast by the AP. A period of broadcasting a beacon frame by an AP is referred to as a beacon (Beacon) period or a beacon (Beacon) interval, and may be marked as a parameter Beacon_Interval. The beacon frame includes a header (header), and is used for time synchronization between the AP and the STA.
   For example, FIG. 2 is a schematic diagram of broadcasting a beacon frame by an AP according to an embodiment of this application. As shown in FIG. 2, the AP broadcasts the beacon frame based on a beacon period. A value of the beacon period is not limited in this embodiment of this application, for example, 100 ms.
(2) Probe request frame: A STA sends the probe request frame when the STA actively searches for a nearby AP. The probe request frame is used to detect an AP that can be accessed.
(3) Probe response frame: After receiving a probe request frame from a STA, an AP sends the probe response frame to the STA.
(4) Data frame: The data frame is used for data transmission after a connection is established between a STA and an AP, and may use a slot structure of a beacon period.

### 2. Wi-Fi peer to peer (peer to peer, P2P) mode

A Wi-Fi P2P protocol is developed based on a framework of the 802.11 protocol, and is a point-to-point connection technology, which enables a plurality of electronic devices to form a network without an AP. The network is referred to as a P2P network (P2P Network) or a P2P group (P2P Group).

A connection may be directly established between two electronic devices, and a working mode is referred to as a Wi-Fi P2P mode or a P2P mode. In the two electronic devices, one electronic device is similar to an AP and is referred to as a group owner (group owner, GO), and the other electronic device is similar to a STA and is referred to as a group client (group client, GC). There can be only one GO in the P2P network. As a central node of the network, the GO may communicate with one or more GCs, and the GCs cannot directly communicate with each other. The P2P network is a centralized network communication structure centered on the GO.

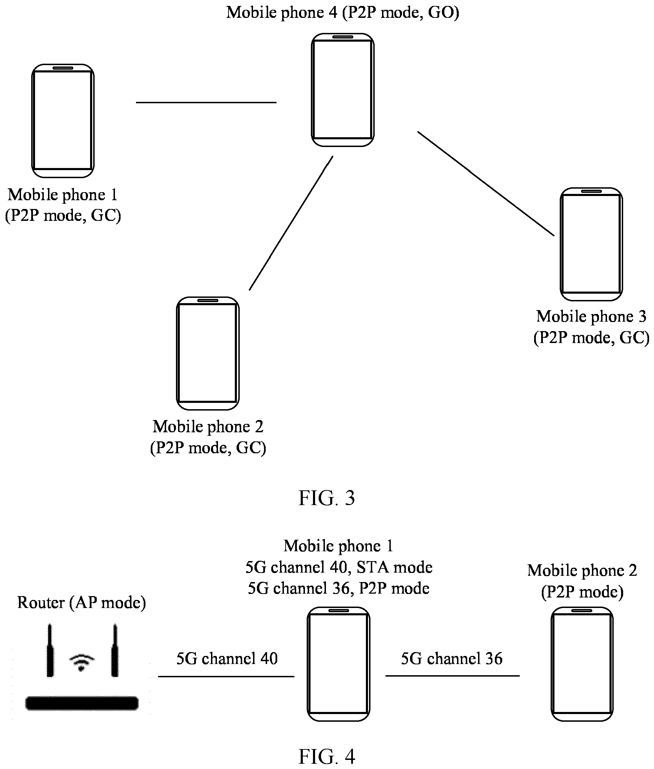

For example, FIG. 3 is a schematic diagram of a scenario in which electronic devices use a P2P mode to communicate according to an embodiment of this application. As shown in FIG. 3, a mobile phone 4 serves as a GO and works in the P2P mode. A mobile phone 1, a mobile phone 2, and a mobile phone 3 all serve as GCs, are separately connected to the mobile phone 4, and work in the P2P mode. Direct Wi-Fi communication cannot be performed between the mobile phone 1 and the mobile phone 2, between the mobile phone 1 and the mobile phone 3, and between the mobile phone 2 and the mobile phone 3.

A service performed by the electronic devices in the P2P mode is not limited in embodiments of this application, for example, projection and file transfer.

When the electronic devices transmit data in the P2P mode, a slot structure of a beacon period may be used.

### 3. DBAC

One electronic device may simultaneously perform Wi-Fi communication with a plurality of devices. A Wi-Fi working mode and a working frequency of the electronic device are not limited in embodiments of this application. For example, the electronic device may perform Wi-Fi communication with a plurality of devices by using a same working frequency, or may separately perform Wi-Fi communication with a plurality of devices by using different working frequencies.

When the electronic device shares a set of hardware resources in a time division multiplexing mode, and separately performs Wi-Fi communication with a plurality of devices by using different working frequencies, this is referred to as DBAC or DBAC multiplexing.

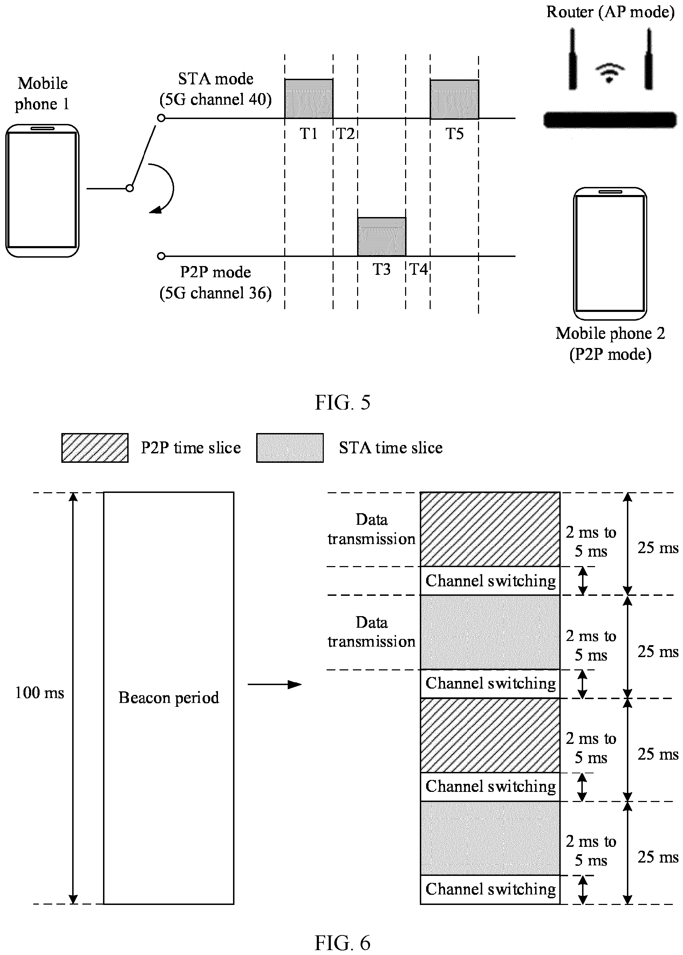

Descriptions are provided below by using examples with reference to FIG. 4 and FIG. 5. The electronic device uses a STA mode and a P2P mode to perform DBAC multiplexing. The DBAC multiplexing is not limited in FIG. 4 and FIG. 5.

As shown in FIG. 4, a router, a mobile phone 1, and a mobile phone 2 are included in a scenario. The mobile phone 1 performs Wi-Fi communication with the router by using a channel 40 of a 5 GHz frequency band, for example, performs an Internet access service. The mobile phone 1 works in the STA mode, and the router works in an AP mode. The mobile phone 1 further performs Wi-Fi communication with the mobile phone 2 by using a channel 36 of the 5 GHz frequency band, for example, performs a projection service. Both the mobile phone 1 and the mobile phone 2 work in the P2P mode. The mobile phone 1 shares a set of hardware resources in a time division multiplexing mode, and communicates with the router or communicates with the mobile phone 2 at a moment. For example, as shown in FIG. 5, by using dynamic time-division switching, the mobile phone 1 may work on the channel 40 in a time period T1 and a time period T5, and connect to the router to perform the Internet access service; and work on the channel 36 in a time period T3, and perform the projection service with the mobile phone 2. A time period T2 and a time period T4 are time overheads of frequency switching of the electronic device. Values of the time periods T1 to T5 are not limited in this embodiment of this application.

It can be learned that when the electronic device performs DBAC multiplexing, because communication is performed by using the time division multiplexing mode, transmission resources need to be allocated to different working frequencies or different working modes in time domain.

### 4. Resource allocation when an electronic device uses a STA mode and a P2P mode to perform DBAC multiplexing

When the electronic device uses the STA mode or the P2P mode to transmit data, a slot structure of a beacon period is used. Because slot structures are the same, when the electronic device uses the STA mode and the P2P mode to perform DBAC multiplexing, in an implementation, transmission resources may be separately allocated to the STA mode and the P2P mode by using a fixed time slice polling mode.

For example, FIG. 6 is a schematic diagram of slot allocation when an electronic device uses a STA mode and a P2P mode to perform DBAC multiplexing according to an embodiment of this application. As shown in FIG. 6, a beacon period is, for example, 100 ms, and the beacon period may be divided into four 25-ms slots to perform dynamic polling scheduling allocation of the P2P mode and the STA mode. For example, the 1^{st} 25-ms slot is allocated to the P2P mode, including a P2P time slice and channel switching duration. The P2P time slice is used by the electronic device to perform data transmission by using the P2P mode. The channel switching duration may be 2 ms to 5 ms, and is a time overhead for switching between the P2P mode and the STA mode. The 2^{nd} 25-ms slot is allocated to the STA mode, and includes the STA time slice and the channel switching duration, where the STA time slice is used by the electronic device to perform data transmission by using the STA mode.

### 5. Application scenario of interconnection and interworking between a plurality of devices, Wi-Fi direct mode, and HiD2D mode

With the development of a Wi-Fi technology and a terminal technology, Wi-Fi is used in more and more scenarios, and a quantity of devices in the scenarios is increasing. For example, an application scenario is interconnection and interworking between a plurality of devices. In this scenario, the plurality of devices are connected for collaboration, and service data is transmitted between the plurality of devices, and an application and a service that support collaboration of the plurality of devices may be referred to as a distributed service, for example, a multi-screen collaboration service and an information sharing service.

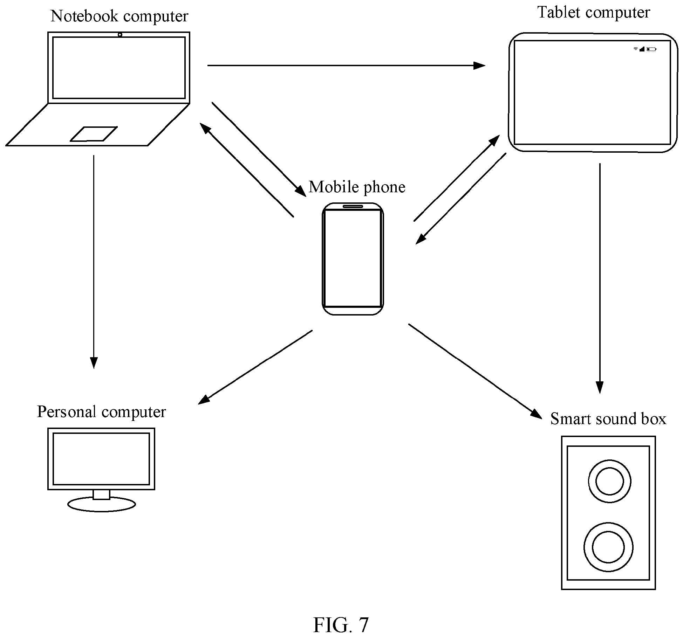

For example, FIG. 7 is a schematic diagram of a scenario of interconnection and interworking between a plurality of devices according to an embodiment of this application. As shown in FIG. 7, five devices, namely, a mobile phone, a notebook computer, a tablet computer, a personal computer, and a smart sound box, are included in the scenario. Any two devices may communicate with each other. For example, the mobile phone may perform a multi-screen collaboration service with the notebook computer and the tablet computer, and content on the mobile phone may be projected and displayed on the notebook computer and the tablet computer. For another example, the notebook computer may perform a projection service with the personal computer. For another example, the tablet computer may perform a file sharing service with the smart sound box. For example, music of the tablet computer is played by using the smart sound box.

It can be learned that, in a multi-device collaboration scenario, it is required that a connection may be established between any two devices to perform Wi-Fi communication, and a super device including a plurality of devices may be presented to a user. In this scenario, although a Wi-Fi P2P mode may be used, due to role limitation of a GO and a GC, establishing a connection between any two devices cannot be implemented. This limits an actual application requirement of a distributed service.

Embodiments of this application provide a Wi-Fi direct mode. When an electronic device works in the Wi-Fi direct mode, Wi-Fi communication between any two devices can be implemented. A name of the Wi-Fi direct mode is not limited in embodiments of this application. Names may be different when device vendors are different, protocol proposers are different, and the like. For example, one Wi-Fi direct mode is named as a HiD2D mode. HiD2D is a Wi-Fi-based terminal interconnection networking protocol, which provides many-to-many role-free interconnection for electronic devices.

### 6. Application scenario in which an electronic device uses a STA mode and a HiD2D mode to perform DBAC multiplexing

To meet a requirement of a distributed service in a scenario of interconnection and interworking between a plurality of devices, the electronic device needs to use the STA mode and the HiD2D mode to perform DBAC multiplexing, so that one electronic device can simultaneously perform Wi-Fi communication with a plurality of devices. In this case, the electronic device needs to separately allocate transmission resources to the STA mode and the HiD2D mode in time domain.

The following describes an application scenario of an embodiment of this application by using an example.

### (1) Single-device DBAC scenario

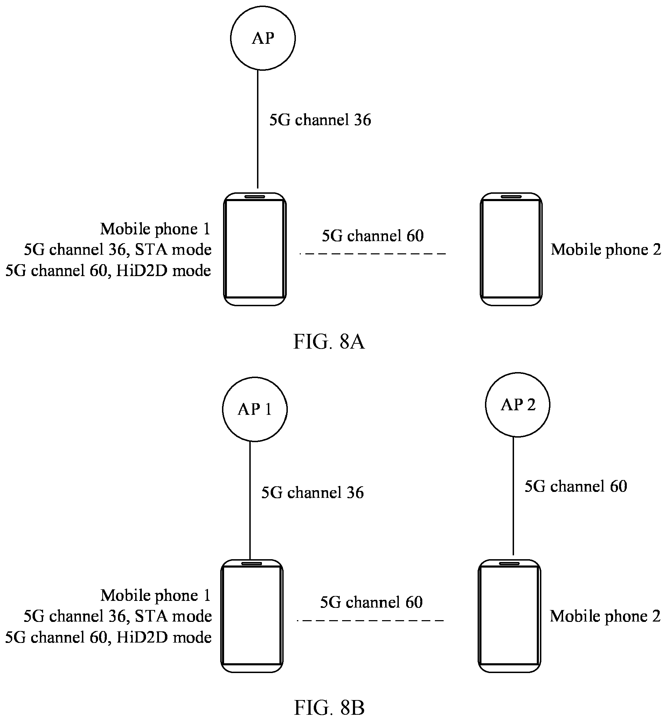

Optionally, in an example, as shown in FIG. 8A, an AP, a mobile phone 1, and a mobile phone 2 are included in the scenario. The mobile phone 1 performs Wi-Fi communication with the AP by using a channel 36 of a 5 GHz frequency band, and the mobile phone 1 works in a STA mode. The mobile phone 1 further performs Wi-Fi communication with the mobile phone 2 by using a channel 60 of the 5 GHz frequency band. Both the mobile phone 1 and the mobile phone 2 work in a HiD2D mode. The mobile phone 1 communicates with the AP or communicates with the mobile phone 2 at a moment, and the mobile phone 1 uses the STA mode and the HiD2D mode to perform DBAC multiplexing. Optionally, for a service between the mobile phone 1 and the mobile phone 2, the mobile phone 1 may be an initiator of the service, or may be a receiver of the service.

Optionally, in another example, as shown in FIG. 8B, an AP 1, an AP 2, the mobile phone 1, and the mobile phone 2 are included in the scenario.

For the mobile phone 1, the mobile phone 1 performs Wi-Fi communication with the AP 1 by using the channel 36 of the 5 GHz frequency band, and the mobile phone 1 works in the STA mode. The mobile phone 1 further performs Wi-Fi communication with the mobile phone 2 by using the channel 60 of the 5 GHz frequency band. Both the mobile phone 1 and the mobile phone 2 work in the HiD2D mode. The mobile phone 1 communicates with the AP 1 or communicates with the mobile phone 2 at a moment, and the mobile phone 1 uses the STA mode and the HiD2D mode to perform DBAC multiplexing. Optionally, for a service between the mobile phone 1 and the mobile phone 2, the mobile phone 1 may be an initiator of the service, or may be a receiver of the service.

For the mobile phone 2, the mobile phone 2 performs Wi-Fi communication with the AP 1 and the mobile phone 1 by using the channel 60 of the 5 GHz frequency band, and working frequencies are the same. This is not a DBAC multiplexing scenario.

In the single-device DBAC scenario, a transmission resource is mainly allocated to an electronic device that generates DBAC, for example, the mobile phone 1 in FIG. 8A or FIG. 8B.

### (2) Dual-device DBAC scenario

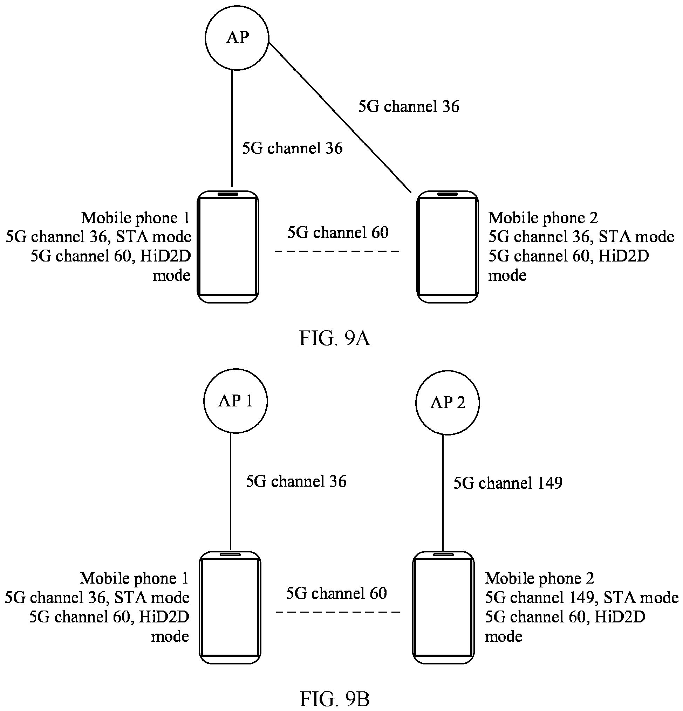

Optionally, in an example, as shown in FIG. 9A, an AP, a mobile phone 1, and a mobile phone 2 are included in the scenario. The mobile phone 1 and the mobile phone 2 are connected to a same AP.

For the mobile phone 1, the mobile phone 1 performs Wi-Fi communication with the AP by using a channel 36 of a 5 GHz frequency band, and the mobile phone 1 works in a STA mode. The mobile phone 1 further performs Wi-Fi communication with the mobile phone 2 by using a channel 60 of the 5 GHz frequency band. Both the mobile phone 1 and the mobile phone 2 work in a HiD2D mode. The mobile phone 1 communicates with the AP or communicates with the mobile phone 2 at a moment, and the mobile phone 1 uses the STA mode and the HiD2D mode to perform DBAC multiplexing. Optionally, for a service between the mobile phone 1 and the mobile phone 2, the mobile phone 1 may be an initiator of the service, or may be a receiver of the service.

Similarly, the mobile phone 2 uses the STA mode and the HiD2D mode to perform DBAC multiplexing.

Because the mobile phone 1 and the mobile phone 2 are connected to the same AP and share a beacon frame sent by the AP, the mobile phone 1, the mobile phone 2, and the AP may be time-synchronized. In this scenario, the mobile phone 1 and the mobile phone 2 may negotiate to determine a transmission resource allocation result. Optionally, the initiator of the service between the mobile phone 1 and the mobile phone 2 may determine a final transmission resource allocation result. For example, in FIG. 9A, it is assumed that the mobile phone 1 is projected to the mobile phone 2, the mobile phone 1 determines the resource allocation result between the mobile phone 1 and the mobile phone 2. Correspondingly, the mobile phone 2 may receive the resource allocation result determined by the mobile phone 1.

Optionally, in another example, as shown in FIG. 9B, the AP 1, the AP 2, the mobile phone 1, and the mobile phone 2 are included in the scenario. The mobile phone 1 and the mobile phone 2 are connected to different APs.

For the mobile phone 1, the mobile phone 1 performs Wi-Fi communication with the AP 1 by using the channel 36 of the 5 GHz frequency band, and the mobile phone 1 works in the STA mode. The mobile phone 1 further performs Wi-Fi communication with the mobile phone 2 by using the channel 60 of the 5 GHz frequency band. Both the mobile phone 1 and the mobile phone 2 work in the HiD2D mode. The mobile phone 1 communicates with the AP 1 or communicates with the mobile phone 2 at a moment, and the mobile phone 1 uses the STA mode and the HiD2D mode to perform DBAC multiplexing.

For the mobile phone 2, the mobile phone 2 performs Wi-Fi communication with the AP 2 by using the channel 149 of the 5 GHz frequency band, and the mobile phone 2 works in the STA mode. The mobile phone 2 further performs Wi-Fi communication with the mobile phone 1 by using the channel 60 of the 5 GHz frequency band. Both the mobile phone 1 and the mobile phone 2 work in the HiD2D mode. The mobile phone 2 communicates with the AP 2 or communicates with the mobile phone 1 at a moment, and the mobile phone 2 uses the STA mode and the HiD2D mode to perform DBAC multiplexing.

However, the mobile phone 1 and the mobile phone 2 are connected to different APs, and time at which the AP 1 sends the beacon frame may be asynchronous with time at which the AP 2 sends the beacon frame. As a result, the mobile phone 1, the mobile phone 2, the AP 1, and the AP 2 are asynchronous. In this scenario, the mobile phone 1 and the mobile phone 2 do not need to negotiate resource allocation, and the scenario is prevented by using AP-guided migration, relay agent Internet access, and the like.

### (3) DBAC scenario with more than three devices

In a DBAC scenario with more than three devices, at least three electronic devices all use a STA mode and a HiD2D mode to perform DBAC multiplexing, and the at least three electronic devices are all connected to a same AP. A total quantity of electronic devices in the scenario and a quantity of electronic devices that use the STA mode and the HiD2D mode to perform DBAC multiplexing are not limited in embodiments of this application.

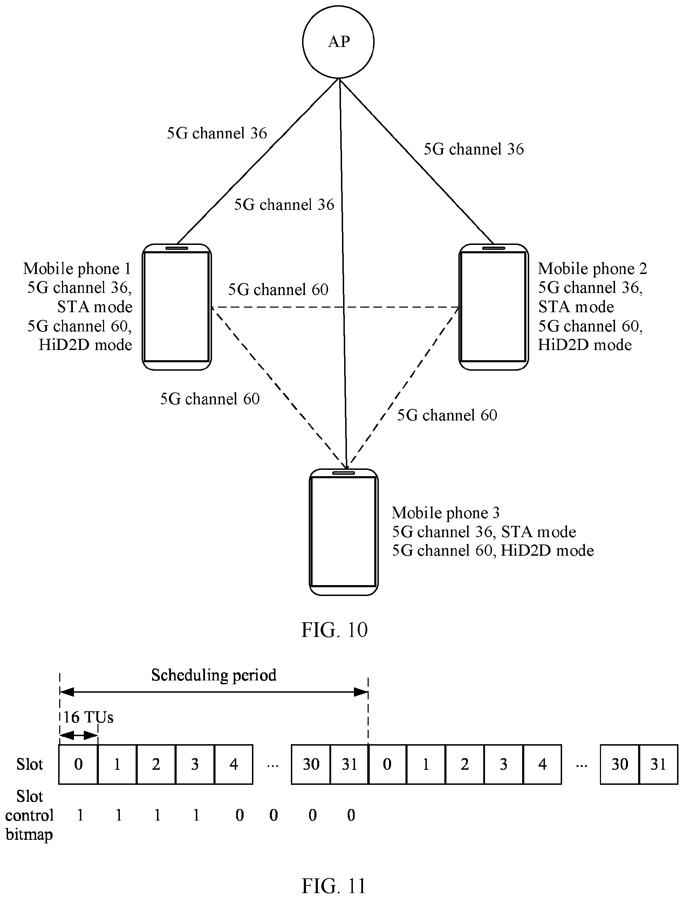

For example, FIG. 10 is a case in which all three electronic devices use a STA mode and a HiD2D mode to perform DBAC multiplexing. As shown in FIG. 10, an AP, a mobile phone 1, a mobile phone 2, and a mobile phone 3 are included in a scenario. The mobile phone 1, the mobile phone 2, and the mobile phone 3 are connected to a same AP.

For the mobile phone 1, the mobile phone 1 performs Wi-Fi communication with the AP by using a channel 36 of a 5 GHz frequency band, and the mobile phone 1 works in the STA mode. The mobile phone 1 further performs Wi-Fi communication with the mobile phone 2 and the mobile phone 3 by using a channel 60 of the 5 GHz frequency band. When the mobile phone 1 communicates with the mobile phone 2, both the mobile phone 1 and the mobile phone 2 work in the HiD2D mode. Similarly, when the mobile phone 1 communicates with the mobile phone 3, both the mobile phone 1 and the mobile phone 3 work in the HiD2D mode. The mobile phone 1 communicates with the AP, or communicates with the mobile phone 2, or communicates with the mobile phone 3 at a moment, and the mobile phone 1 uses the STA mode and the HiD2D mode to perform DBAC multiplexing.

Similarly, both the mobile phone 2 and the mobile phone 3 use the STA mode and the HiD2D mode to perform DBAC multiplexing.

Because the mobile phone 1, the mobile phone 2, and the mobile phone 3 are connected to the same AP and share a beacon frame sent by the AP, the mobile phone 1, the mobile phone 2, the mobile phone 3, and the AP may be time-synchronized. In this scenario, the mobile phone 1, the mobile phone 2, and the mobile phone 3 may negotiate to determine a resource allocation result.

In embodiments of this application, each electronic device may first obtain a resource allocation result between the electronic device and another device based on the method in the dual-device DBAC scenario, and then determine a final resource allocation result based on a plurality of resource allocation results. For example, the mobile phone 1 is used as an example. In a dual-device DBAC scenario in which the mobile phone 1, the mobile phone 2, and an AP are included, the mobile phone 1 may obtain a resource allocation result 12 between the mobile phone 1 and the mobile phone 2. Optionally, if the mobile phone 1 is the initiator of the service between the mobile phone 1 and the mobile phone 2, the mobile phone 1 may determine the resource allocation result 12. If the mobile phone 1 is the receiver of the service between the mobile phone 1 and the mobile phone 2, the mobile phone 2 may determine the resource allocation result 12, and the mobile phone 1 may receive the resource allocation result 12 sent by the mobile phone 2. Similarly, in a dual-device DBAC scenario in which the mobile phone 1, the mobile phone 3, and the AP are included, the mobile phone 1 may obtain a resource allocation result 13 between the mobile phone 1 and the mobile phone 3. Therefore, the mobile phone 1 may determine a final resource allocation result based on the resource allocation result 12 and the resource allocation result 13.

Optionally, in an implementation, when an allocation conflict exists between the STA mode and the HiD2D mode for a plurality of resource allocation results obtained by the mobile phone 1, resource allocation to the HiD2D mode is ensured according to a principle that the HiD2D mode takes precedence. Detailed descriptions are provided subsequently with reference to FIG. 10 to FIG. 19.

### 7. Slot structure, scheduling period, and slot control bitmap (Bitmap) in a HiD2D mode

In the HiD2D protocol, 1024 µs is used as a time unit (time unit, TU), 16 TUs are used as a slot (Slot), and K slots form a scheduling period. The slot is a minimum unit time in the HiD2D protocol. K is a positive integer greater than 1, for example, a value of K is 32.

An electronic device dynamically generates a slot control bitmap (Bitmap) in a unit of the scheduling period, and each slot in the scheduling period corresponds to a 1-bit value. Optionally, if a 1-bit value corresponding to the slot is 1, it indicates that the slot is in a HiD2D working state; and if a 1-bit value corresponding to the slot is 0, it indicates that the slot is in a non-HiD2D working state, for example, the slot is in a sleep state or in a STA working state.

Because each slot may indicate, by using the 1-bit value, whether the slot is in the HiD2D working state, implementation of the slot control bitmap is simple, a scheduling manner is flexible, and few air interface resources are occupied during transmission.

For example, FIG. 11 is a schematic diagram of a slot structure and a slot control bitmap in a HiD2D mode according to an embodiment of this application. As shown in FIG. 11, a scheduling period includes 32 slots, and may be marked as a slot 0 to a slot 31, or a slot 0 to a slot 31. In FIG. 11, values of slot control bitmaps corresponding to the slot 0 to a slot 3 are 1, indicating that the slot 0 to the slot 3 are in a HiD2D working state. Values of slot control bitmaps corresponding to a slot 4 to the slot 31 are 0, indicating that the slot 4 to the slot 31 are in a non-HiD2D working state.

Optionally, the slot control bitmap may indicate slot allocation information when an electronic device uses a STA mode and the HiD2D mode to perform DBAC multiplexing. For example, in the slot control bitmap, if a 1-bit value corresponding to the slot is 1, it indicates that the electronic device is in the HiD2D mode in the slot, and if the 1-bit value corresponding to the slot is 0, it indicates that the electronic device is in the STA mode or a sleep state in the slot.

### 8. First synchronization slot and second synchronization slot

When an electronic device uses a HiD2D mode and a STA mode to perform DBAC multiplexing, the electronic device needs to separately complete time synchronization of the HiD2D mode and the STA mode, to perform subsequent data transmission.

In a plurality of slots included in a scheduling period of the HiD2D mode, a slot in which the electronic device performs time synchronization in the HiD2D mode is referred to as a first synchronization slot. An example is used for description. It is assumed that a first electronic device and a second electronic device use the HiD2D mode to perform Wi-Fi communication, and time synchronization needs to be performed between the first electronic device and the second electronic device. The first electronic device may send a preset synchronization signal in the first synchronization slot. Correspondingly, the second electronic device may receive the signal, and detect whether the received signal is the preset synchronization signal. When determining that the preset synchronization signal is received, the second electronic device may determine a location of the first synchronization slot in terms of time, to complete time synchronization between the first electronic device and the second electronic device. The preset synchronization signal is not limited in this embodiment of this application.

When performing Wi-Fi communication with an AP in the STA mode, the electronic device also needs to complete time synchronization with the AP. In a conventional technology, the AP periodically sends a beacon frame, and correspondingly, the electronic device completes synchronization by receiving the beacon frame sent by the AP. In the plurality of slots included in the scheduling period of the HiD2D mode, a slot to which a start location of the beacon frame belongs is referred to as a second synchronization slot. Time corresponding to the second synchronization slot is used for time synchronization of the electronic device in the STA mode.

Optionally, the first synchronization slot is further used for signaling interaction between the electronic device and another device.

In slot control bitmaps, a value corresponding to the first synchronization slot may be 1, and a value corresponding to the second synchronization slot may be 0.

Optionally, the first synchronization slot includes first T slots in the scheduling period of the HiD2D mode, and T is a positive integer. For example, the first synchronization slot includes the 1^{st} slot and the 2^{nd} slot in the scheduling period.

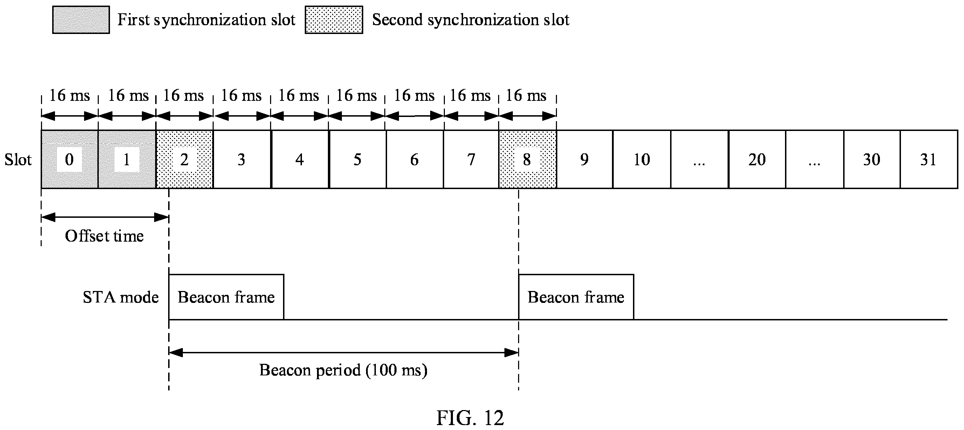

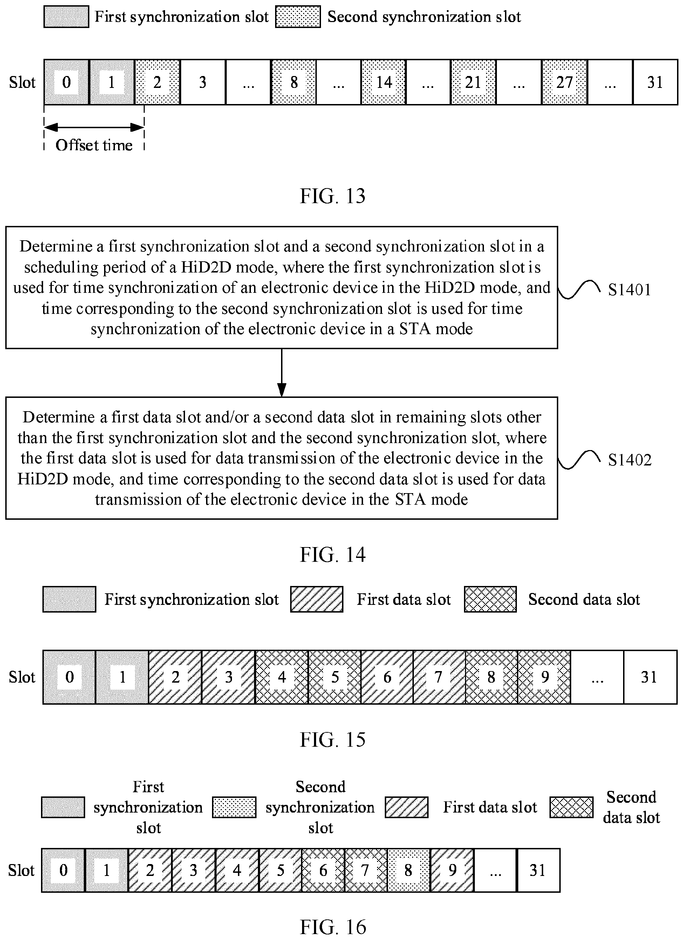

For example, FIG. 12 is a schematic diagram of a first synchronization slot and a second synchronization slot according to an embodiment of this application. As shown in FIG. 12, a scheduling period of a HiD2D mode includes 32 slots, which are marked as the slot 0 to the slot 31, and each slot is 16 ms. The first synchronization slot includes the slot 0 and the slot 1. A beacon period is 100 ms, and the beacon period corresponds to 100 ms/16 ms=6.25 slots. The scheduling period of the HiD2D mode may include a plurality of second synchronization slots. As shown in FIG. 12, it is assumed that a slot 2 is the second synchronization slot, and a next second synchronization slot may be a slot 8. For example, as shown in FIG. 13, in the scheduling period of the HiD2D mode, the second synchronization slot may include the slot 2, the slot 8, a slot 14, a slot 21, and a slot 27.

### 9. Offset time

Offset time indicates a minimum time interval between a reference slot in a first synchronization slot and a start point of a beacon frame of a STA mode. The offset time may be used to determine a second synchronization slot.

The reference slot may be any slot in the first synchronization slot. Optionally, for ease of statistics collection and processing, the reference slot may be the 1^{st} slot in the first synchronization slot.

Optionally, the offset time may be a minimum time interval between the reference slot and a start point of a beacon frame after the reference slot, or the offset time may be a minimum time interval between the reference slot and a start point of a beacon frame before the reference slot.

Optionally, the offset time may be a minimum time interval between a start point of the reference slot and a start point of the beacon frame, or the offset time may be a minimum time interval between an end point of the reference slot and a start point of the beacon frame.

For example, as shown in FIG. 12 or FIG. 13, the reference slot may be a slot 0, and the offset time is a time interval between start time of the slot 0 and a start point of the 1^{st} beacon frame after the slot 0.

### 10. First data slot and second data slot

When an electronic device uses a HiD2D mode and a STA mode to perform DBAC multiplexing, the electronic device may separately perform data transmission in the HiD2D mode and the STA mode.

In a plurality of slots included in a scheduling period of the HiD2D mode, a slot in which the electronic device performs data transmission in the HiD2D mode is referred to as a first data slot, and a slot corresponding to time at which the electronic device performs data transmission in the STA mode is referred to as a second data slot.

In slot control bitmaps, a value corresponding to the first data slot may be 1, and a value corresponding to the second data slot may be 0.

Optionally, when actually scheduling the second data slot in the scheduling period of the HiD2D mode, the electronic device may schedule a second synchronization slot as the second data slot. It may be understood that a slot in a scheduling period of the HiD2D mode is not only the second synchronization slot, but also the second data slot. Time corresponding to the slot is used by the electronic device to complete time synchronization in the STA mode, and may also be used for data transmission in the STA mode. This implementation is usually used in a scenario in which remaining slots other than the first synchronization slot and the second synchronization slot in the scheduling period are insufficient to meet data transmission requirements in the HiD2D mode and the STA mode.

Currently, the electronic device may use the STA mode and a Wi-Fi P2P mode to perform DBAC multiplexing, so that one electronic device can simultaneously perform Wi-Fi communication with a plurality of devices. The STA mode and the Wi-Fi P2P mode may use a same slot structure. Because role allocation of a GO and a GC in the Wi-Fi P2P mode limits an application requirement of a distributed service, the electronic device uses a Wi-Fi direct mode to implement communication between any two devices. However, slot structures of the STA mode and the Wi-Fi direct mode are different. Therefore, an embodiment of this application provides a resource allocation method in a Wi-Fi dual mode. The Wi-Fi dual mode includes the Wi-Fi direct mode, and transmission resources are separately configured for the Wi-Fi dual mode in time domain by using a time division multiplexing mode, so that transmission resource allocation is implemented when an electronic device uses the Wi-Fi dual mode to perform DBAC multiplexing, thereby meeting an application requirement of a distributed service.

The following describes in detail technical solutions of this application by using specific embodiments. The following embodiments may be combined with each other, and same or similar concepts or processes may not be repeatedly described in some embodiments.

Embodiments of this application may be combined with each other, and same or similar concepts or processes may not be repeatedly described in some embodiments. Terms "first", "second", "third", "fourth", and the like (if any) in embodiments of this application are used to distinguish between similar objects, but not necessarily describe a specific order or sequence.

It should be noted that in this embodiment of this application, an example in which the Wi-Fi direct mode is a HiD2D mode is used for description, but the Wi-Fi direct mode is not limited.

It should be noted that in this embodiment of this application, an example in which the Wi-Fi dual mode includes the HiD2D mode and a STA mode is used for description, but the Wi-Fi dual mode is not limited. The Wi-Fi dual mode may further include another two working modes. For example, the Wi-Fi dual mode may further include a Wi-Fi P2P mode and the HiD2D mode.

FIG. 14 is a flowchart of a resource allocation method in a Wi-Fi dual mode according to an embodiment of this application. The resource allocation method in the Wi-Fi dual mode provided in this embodiment is applicable to a single-device DBAC scenario, for example, the scenario shown in FIG. 8A or FIG. 8B. An execution body may be an electronic device that uses a STA mode and a HiD2D mode to perform DBAC multiplexing, for example, the mobile phone 1 in FIG. 8A or FIG. 8B. For ease of description and distinguishing between different scenarios, the execution body may be referred to as a first electronic device. As shown in FIG. 14, the resource allocation method in the Wi-Fi dual mode provided in this embodiment may include the following steps.

S1401: Determine a first synchronization slot and a second synchronization slot in a scheduling period of the HiD2D mode, where the scheduling period includes K slots in the HiD2D mode, and K is a positive integer greater than 1. The first synchronization slot is used for time synchronization of the electronic device in the HiD2D mode, and time corresponding to the second synchronization slot is used for time synchronization of the electronic device in the STA mode.

Specifically, in the STA mode, the electronic device performs time synchronization by receiving a beacon frame sent by an AP. During data transmission, a slot structure of a beacon period may be used. For details, refer to the 802.11 protocol. Details are not described herein again. HiD2D is a Wi-Fi-based terminal interconnection networking protocol. The HiD2D mode has a slot structure different from that in the STA mode. Therefore, a slot in a HiD2D working state and a slot in a non-HiD2D working state need to be determined in the K slots included in the scheduling period of the HiD2D mode.

The first synchronization slot is in the HiD2D working state, and is used for the time synchronization of the electronic device in the HiD2D mode. A value of a slot control bitmap may be 1. The second synchronization slot is in the non-HiD2D working state, or is in a STA working state. The electronic device may perform time synchronization in the STA mode during the time corresponding to the second synchronization slot, and a value of a slot control bitmap may be 0.

Quantities of first synchronization slots and second synchronization slots are not limited in this embodiment. For example, there may be one first synchronization slot and one second synchronization slot, or there may be a plurality of first synchronization slots and a plurality of second synchronization slots, and "a plurality of" refers to two or more.

S1402: Determine a first data slot and/or a second data slot in remaining slots other than the first synchronization slot and the second synchronization slot in the K slots, where the first data slot is used for data transmission of the electronic device in the HiD2D mode, and time corresponding to the second data slot is used for data transmission of the electronic device in the STA mode.

Specifically, in a scheduling period, in addition to determined synchronization slots, remaining slots may be used for data transmission in the STA mode and the HiD2D mode. The first data slot is in the HiD2D working state, and is used for data transmission of the electronic device in the HiD2D mode. A value of a slot control bitmap may be 1. The second data slot is in the non-HiD2D working state, or is in the STA working state. The electronic device may perform data transmission in the STA mode during the time corresponding to the second synchronization slot, and a value of a slot control bitmap may be 0.

Specific locations of the first data slot and the second data slot in the N slots in the scheduling period are not limited in this embodiment. If the first data slot includes a plurality of slots, all first data slots may be consecutive in locations, or may be distributed at intervals. Similarly, if the second data slot includes a plurality of slots, all second data slots may be consecutive in locations, or may be distributed at intervals.

Quantities of first data slots and second data slots are not limited in this embodiment. For example, there may be zero first data slots and zero second data slots, there may be one first data slot and one second data slot, or there may be a plurality of first data slots and a plurality of second data slots, and "a plurality of" refers to two or more.

It can be learned that the resource allocation method in the Wi-Fi dual mode provided in this embodiment is applicable to a scenario in which the electronic device uses the STA mode and the HiD2D mode to perform DBAC multiplexing. In the scheduling period of the HiD2D mode, the first synchronization slot and the second synchronization slot are first determined. The first synchronization slot ensures time synchronization of the electronic device in the HiD2D mode, and the second synchronization slot ensures time synchronization of the electronic device in the STA mode. Then, the first data slot and the second data slot that are used for data transmission are determined. According to the resource allocation method in the Wi-Fi dual mode provided in this embodiment, when different slot structures are used in the STA mode and the HiD2D mode, resource allocation is implemented when the electronic device uses the STA mode and the HiD2D mode to perform DBAC multiplexing, so that the electronic device simultaneously performs Wi-Fi communication with a plurality of devices, and a requirement of a distributed service is met.

Optionally, the resource allocation method in the Wi-Fi dual mode provided in this embodiment may further include:
determining a slot control bitmap of the scheduling period, where a value corresponding to the first synchronization slot and the first data slot is 1, and a value corresponding to the second synchronization slot and the second data slot is 0.

The following describes an implementation of determining the first synchronization slot and the second synchronization slot in step S1401.

Optionally, in step S1401, the determining a first synchronization slot and a second synchronization slot in a scheduling period of the HiD2D mode may include:
determining the first synchronization slot in the K slots;
obtaining offset time, where the offset time indicates a minimum time interval between a reference slot in the first synchronization slot and a start point of the beacon frame of the STA mode; and
determining the second synchronization slot in the K slots based on the reference slot, the offset time, and a beacon period of the beacon frame, where the second synchronization slot is a slot to which the start point of the beacon frame belongs.

Descriptions are provided with reference to FIG. 12. The HiD2D protocol usually specifies the location of the first synchronization slot. Therefore, the first synchronization slot is first determined. Optionally, the first synchronization slot may include the 1^{st} slot and the 2^{nd} slot in the K slots, that is, the slot 0 and the slot 1 in FIG. 12, and a value of the slot control bitmap may be 1. Then, all second synchronization slots may be determined in the K slots in the scheduling period by using the offset time, the reference slot in the first synchronization slot, and the beacon period of the beacon frame. A value of the slot control bitmap of the second synchronization slot may be 0.

A value of the offset time is not limited in this embodiment. The offset time may be marked as a parameter Beacon_offset.

The reference slot in the first synchronization slot is not limited in this embodiment. For example, the reference slot is the 1^{st} slot in the first synchronization slot, for example, the slot 0 in FIG. 12.

Optionally, the determining the second synchronization slot in the K slots based on the reference slot, the offset time, and a beacon period of the beacon frame may include:
determining the 1^{st} second synchronization slot after the reference slot in the K slots based on the reference slot and the offset time; and
continuing to determine the second synchronization slot in the K slots based on the 1^{st} second synchronization slot and the beacon period.

Descriptions are provided with reference to FIG. 12 and FIG. 13. As shown in FIG. 12, the reference slot is the slot 0. After the offset time is obtained, it may be determined that the 1^{st} second synchronization slot after the first synchronization slot is the slot 2. Further, all second synchronization slots may be determined based on the beacon period of the beacon frame. As shown in FIG. 13, the second synchronization slot may include the slot 2, the slot 8, the slot 14, the slot 21, and the slot 27.

Optionally, the resource allocation method in the Wi-Fi dual mode provided in this embodiment may further include:
determining whether the beacon frame sent by the AP is received within the time corresponding to the second synchronization slot; and
if no beacon frame sent by the AP is received within the time corresponding to the second synchronization slot, and no beacon frame sent by the AP is received within time corresponding to a preset quantity of consecutive second synchronization slots, switching from using the HiD2D mode and the STA mode to using the STA mode to perform DBAC multiplexing.

A value of the preset quantity is not limited in this embodiment, for example, the preset quantity is 25.

Specifically, when the electronic device works in the STA mode, the electronic device performs time synchronization with the AP by receiving a beacon frame broadcast by the AP. If the beacon frame sent by the AP is received within the time corresponding to the second synchronization slot, the electronic device may perform time synchronization with the AP based on the beacon frame, and may further perform signaling interaction. If the beacon frame sent by the AP is not received within the time corresponding to the second synchronization slot, a value of a beacon frame miss (Beacon_miss) counter may be increased by 1, and whether the beacon frame sent by the AP is received continues to be determined within time corresponding to a next second synchronization slot. If the value of the beacon frame miss counter exceeds the preset quantity, it indicates that the electronic device does not receive the beacon frame within long continuous time, and forcible synchronization of the beacon frame may be triggered. In other words, the electronic device switches from using the HiD2D mode and the STA mode to using the STA mode to perform DBAC multiplexing, and waits for receiving the beacon frame. Switching to only using the STA mode ensures that the electronic device can successfully receive the beacon frame.

Optionally, the resource allocation method in the Wi-Fi dual mode provided in this embodiment may further include:
if no beacon frame sent by the AP is received within preset duration after the STA mode is used, switching from using the STA mode to using the HiD2D mode.

A value of the preset duration is not limited in this embodiment. Optionally, preset duration=guard duration+beacon period of a beacon frame*I, where I is a positive integer. The guard duration may be represented by a parameter Guard_Time, and is used for a time overhead of switching, by the electronic device, from using the HiD2D mode and the STA mode to only using the STA mode to perform DBAC multiplexing. A value of the guard duration is not limited in this embodiment, for example, 20 ms.

Specifically, the electronic device switches from using the HiD2D mode and the STA mode to only using the STA mode to perform DBAC multiplexing, and waits for receiving the beacon frame. If no beacon frame is received within the preset duration, it may be determined that a STA is disconnected, and the electronic device switches from only using the STA mode to only using the HiD2D mode. For example, the electronic device disconnects a STA connection to another device, to ensure that the electronic device can use the HiD2D mode to perform a service.

The following describes an implementation of determining the first data slot and/or the second data slot in step S1402.

Optionally, in an implementation, in step S1402, the determining the first data slot and the second data slot in remaining slots may include:
obtaining a ratio of a quantity of first data slots to a quantity of second data slots; and
determining the first data slot and the second data slot in the remaining slots based on the ratio of the slot quantities.

A value of the ratio of the slot quantities is not limited in this embodiment, for example, the ratio of the slot quantities is 1:1 or 2:1.

For example, in an implementation, the ratio of the slot quantities is 1:1, that is, a quantity of first data slots corresponding to the HiD2D mode is the same as a quantity of second data slots corresponding to the STA mode. As shown in FIG. 15, to reflect the data slot, the second synchronization slot is not shown in the figure. In FIG. 15, two first data slots and two second data slots are set at an interval.

For example, in another implementation, the ratio of the slot quantities is 2: 1, that is, a quantity of first data slots corresponding to the HiD2D mode is twice a quantity of second data slots corresponding to the STA mode. As shown in FIG. 16, the slot 0 and the slot 1 are first synchronization slots, the slot 8 is the second synchronization slot, the slot 2 to a slot 5 are first data slots, and a slot 6 and a slot 7 are second data slots. Statuses of other slots are not shown.

In can be learned that in this implementation, after the first synchronization slot and the second synchronization slot are determined in the K slots in the scheduling period, the remaining slots are allocated to the HiD2D mode and the STA mode in a static allocation manner based on a preset proportion. This implementation is simple.

Optionally, in another implementation, in step S1402, the determining the first data slot and the second data slot in remaining slots may include:
determining a quantity M of slots required when data transmission is performed by using only the HiD2D mode, and a quantity N of slots corresponding to time required when data transmission is performed by using only the STA mode, where both M and N are positive integers; and
determining the first data slot and the second data slot in the remaining slots based on M and N.

In this implementation, remaining slots other than the first synchronization slot and the second synchronization slot in the scheduling period are allocated in a dynamic allocation manner. First, the quantity M of slots required when only the HiD2D mode is used and the quantity N of slots required when only the STA mode is used are separately predicted, and then coordinated allocation is performed based on M, N, and a quantity of the remaining slots. Accuracy of determining the first data slot and the second data slot is improved for consideration of an actual service volume requirement.

An existing implementation may be used to predict the quantity M of slots required when data transmission is performed by using only the HiD2D mode, and the quantity N of slots corresponding to time required when data transmission is performed by using only the STA mode. Details are not described in this embodiment. For example, M and N are predicted based on factors such as a service type, a traffic volume, and a throughput bandwidth capability. For example, when the quantity M of slots required when data transmission is performed by using only the HiD2D mode is predicted based on the service type and the traffic volume, when a service executed by the electronic device is a heavy-load video projection service at 60 frames per second (frames per second, FPS), values of slot control bitmaps may be all set to 1, that is, 100% of the slots are scheduled; or when a service executed by the electronic device is a light-load projection service, values of slot control bitmaps may be a "1100..." sequence, that is, 1/2 of the slots are scheduled. When the electronic device is in a keepalive state, values of slot control bitmaps of the slot 0 and the slot 1 may be set to 1, and values of slot control bitmaps of other slots are set to 0, that is, 0% of the slots is scheduled. For another example, when the quantity N of slots corresponding to time required when data transmission is performed by using only the STA mode is predicted based on the traffic volume and the throughput bandwidth capability of the service, if the traffic volume of the service is 100 Mbps and the bandwidth capability is 800 Mbps, in the scheduling period of the HiD2D mode, 1/8 of the slots need to be scheduled for service transmission in the STA mode.

Optionally, when the first electronic device uses the HiD2D mode to perform a service with a second electronic device, the first electronic device may be an initiator of the service, or may be a receiver of the service. If the first electronic device is the initiator of the service, the first electronic device may directly predict the quantity M of slots required when data transmission is performed by using only the HiD2D mode, and the quantity N of slots corresponding to time required when data transmission is performed by using only the STA mode. If the first electronic device is the receiver of the service, the first electronic device may receive related information sent by the second electronic device, and determine M and N based on the related information. Content of the related information is not limited in this embodiment, and the related information is used to determine M and N. For example, the related information may include at least one of the service type, the traffic volume, and the throughput bandwidth capability.

Optionally, in a scenario, the determining the first data slot and the second data slot in the remaining slots based on M and N may include:
if M+N≤the quantity of the remaining slots, determining M slots in the remaining slots as the first data slot, and determining N slots other than the M slots in the remaining slots as the second data slot.

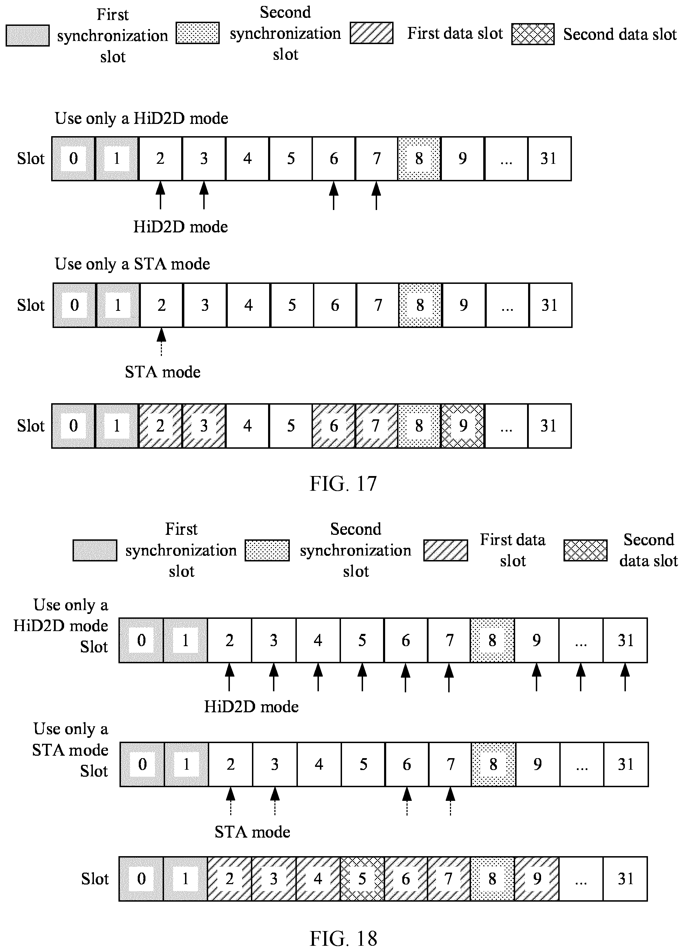

For example, as shown in FIG. 17, when only the HiD2D mode is used, values of slot control bitmaps may be a " 1100..." sequence, that is, 1/2 of the slots are scheduled. When only the STA mode is used, 1/4 of the slots are scheduled. M+N is 3/4 of the quantity of the remaining slots. Therefore, the slot 0 and the slot 1 are first synchronization slots; the slot 8 is the second synchronization slot; the slot 2, the slot 3, the slot 6, and the slot 7 are first data slots in the HiD2D mode; a slot 9 is the second data slot in the STA mode; and the slot 4 and the slot 5 are idle slots. Statuses of other slots are not shown.

In this implementation, in addition to the M slots required for the HiD2D mode and the N slots required for the STA mode, there are idle slots in the remaining slots. This indicates that the remaining slots can meet data transmission requirements of the HiD2D mode and the STA mode, and there is no resource allocation conflict. The M slots may be allocated to the HiD2D mode, and the N slots may be allocated to the STA mode.

Optionally, if M+N<the quantity of the remaining slots, the method may further include:
determining a slot other than the M slots and the N slots in the remaining slots as the first data slot or the second data slot.

The idle slots in the remaining slots are allocated to the HiD2D mode or the STA mode, so that a capability of responding to burst service traffic in the HiD2D mode or the STA mode is improved.

Optionally, in another scenario, the determining the first data slot and the second data slot in the remaining slots based on M and N may include:
if M+N>the quantity of the remaining slots, determining the first data slot and the second data slot in the remaining slots based on a preset scheduling rule. The preset scheduling rule includes any one of the following: strict priority (strict priority, SP) scheduling, round robin (round robin, RR) scheduling, or weighted round robin (weighted round robin, WRR) scheduling.

In this implementation, the remaining slots cannot meet the M slots required for the HiD2D mode and the N slots required for the STA mode, and a resource allocation conflict exists. Coordinated allocation needs to be performed on the first data slot and the second data slot by using a preset scheduling algorithm, to improve a resource allocation effect.

The preset scheduling algorithm includes but is not limited to the SP scheduling, the RR scheduling, and the WRR scheduling. The SP scheduling can preferentially ensure data slot allocation to a high-priority mode based on priorities of the HiD2D mode and STA mode. The RR scheduling complies with a fairness principle, and a quantity of first data slots may be the same as or close to a quantity of second data slots. The WRR scheduling can allocate the data slots based on weights corresponding to the HiD2D mode and STA mode.

Optionally, when the preset scheduling rule is the SP scheduling, the determining the first data slot and the second data slot in the remaining slots based on a preset scheduling rule may include:
determining M slots in the remaining slots as the first data slot, and determining a slot other than the M slots in the remaining slots as the second data slot; or
determining N slots in the remaining slots as the second data slot, and determining a slot other than the N slots in the remaining slots as the first data slot.

In this implementation, the data transmission requirement in the HiD2D mode may be met, or the data transmission requirement in the STA mode may be met.

Optionally, when the preset scheduling rule is the RR scheduling, the determining the first data slot and the second data slot in the remaining slots based on a preset scheduling rule may include:
determining M-(M+N-K)/2 slots in the remaining slots as the first data slot, and determining a slot other than the M-(M+N-K)/2 slots in the remaining slots as the second data slot, where K is the quantity of the remaining slots.

For example, as shown in FIG. 18, when only the HiD2D mode is used, values of slot control bitmaps may be an all-1 sequence, that is, 100% of the slots are scheduled. When only the STA mode is used, 1/2 of the slots are scheduled. M+N is greater than the quantity of the remaining slots. Therefore, the quantity of data slots required for the HiD2D mode and the quantity of data slots required for the STA mode are reduced. After adjustment, as shown in FIG. 18, the slot 0 and the slot 1 are first synchronization slots; the slot 8 is the second synchronization slot; the slot 2 to the slot 4, the slot 6, the slot 7, and the slot 9 are first data slots in the HiD2D mode; and the slot 5 is the second data slot in the STA mode. Statuses of other slots are not shown.

In this implementation, the quantity of data slots required for the HiD2D mode and the quantity of data slots required for the STA mode are fairly reduced, to avoid a large rate fluctuation caused to data transmission in the HiD2D mode and the STA mode.

Optionally, when the preset scheduling rule is the WRR scheduling, the determining the first data slot and the second data slot in the remaining slots based on a preset scheduling rule may include:
determining M-(M+N-K)*q slots in the remaining slots as the first data slot, and determining a slot other than the M-(M+N-K)*q slots in the remaining slots as the second data slot, where K is the quantity of the remaining slots, and 0<q<1.

A value of q is not limited in this embodiment. A weight corresponding to the HiD2D mode is q, and a weight corresponding to the STA mode may be 1-q. For example, q=1/3.

In this implementation, the quantity of data slots required for the HiD2D mode and the quantity of data slots required for the STA mode are reduced based on the weights, to avoid a large rate fluctuation caused to data transmission in the HiD2D mode and the STA mode.

Optionally, this application further provides a resource allocation method in a Wi-Fi dual mode, which is applicable to a dual-device DBAC scenario, for example, the scenario shown in FIG 9A. An execution body may be an electronic device that uses a STA mode and a HiD2D mode to perform DBAC multiplexing, for example, the mobile phone 1 in FIG 9A. For ease of description and distinguishing between different scenarios, the execution body may be referred to as a first electronic device. The first electronic device uses the HiD2D mode to perform a first service with a second electronic device, and the first electronic device initiates the first service. Both the first electronic device and the second electronic device are connected to an access point AP. The second electronic device is, for example, the mobile phone 2 in FIG. 9A.

The resource allocation method in the Wi-Fi dual mode provided in this embodiment may further include:

The first electronic device sends slot configuration information to the second electronic device, where the slot configuration information indicates locations of a first data slot and a second data slot in a scheduling period.

The first electronic device may determine the slot configuration information. For determining the slot configuration information by the first electronic device, refer to the embodiment shown in FIG. 14. Details are not described herein again. Optionally, the slot configuration information may be a slot control bitmap.

Optionally, a first synchronization slot in the scheduling period may include the slot configuration information.

Optionally, in an implementation, the first synchronization slot in a current scheduling period may include slot configuration information of the current scheduling period.

Optionally, in another implementation, the first synchronization slot in a current scheduling period may include slot configuration information of a next scheduling period after the current scheduling period.

Optionally, this application further provides a resource allocation method in a Wi-Fi dual mode, which is applicable to a DBAC scenario with more than three devices, for example, the scenario shown in FIG 10. An execution body may be an electronic device that uses a STA mode and a HiD2D mode to perform DBAC multiplexing, for example, the mobile phone 1, the mobile phone 2, and the mobile phone 3 in FIG 10. For ease of description and distinguishing between different scenarios, the execution body may be referred to as a first electronic device. A first electronic device is separately connected to a second electronic device and a third electronic device by using the HiD2D mode. The first electronic device, the second electronic device, and the third electronic device are all connected to an AP. Both the second electronic device and the third electronic device use the HiD2D mode and the STA mode to perform DBAC multiplexing.

In the resource allocation method in the Wi-Fi dual mode provided in this embodiment, in S 1402, the determining a first data slot and a second data slot in the remaining slots may include:
obtaining first slot configuration information between the first electronic device and the second electronic device and second slot configuration information between the first electronic device and the third electronic device, where the first slot configuration information indicates locations of the first data slot and the second data slot in the scheduling period when the first electronic device communicates with the second electronic device, and the second slot configuration information indicates locations of the first data slot and the second data slot in the scheduling period when the first electronic device communicates with the third electronic device; and
determining, in the remaining slots, a union set of locations of the first data slot separately indicated by the first slot configuration information and the second slot configuration information as the first data slot, and determining an intersection set of locations of the second data slot separately indicated by the first slot configuration information and the second slot configuration information as the second data slot.

The first electronic device, the second electronic device, or the third electronic device may obtain the slot configuration information. For details, refer to the foregoing embodiments of this application. Details are not described herein again.

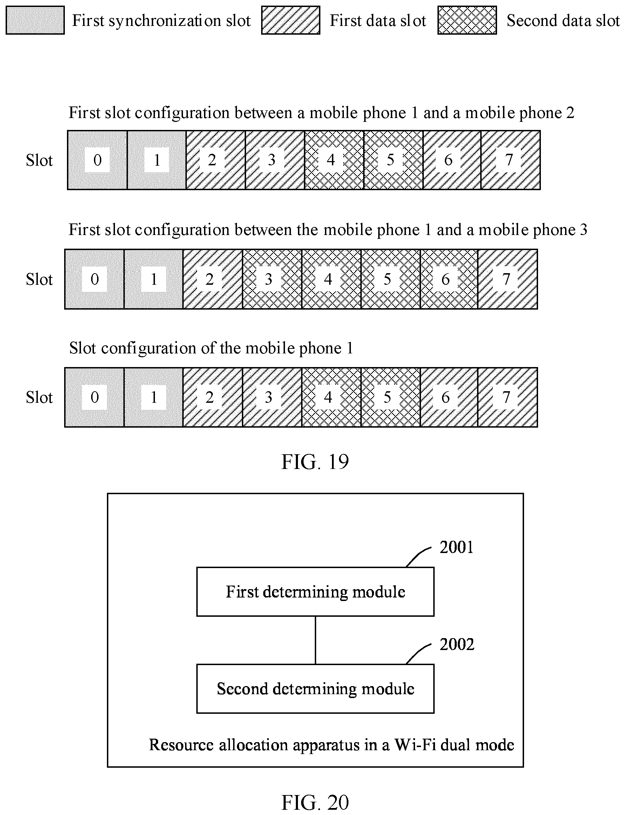

Descriptions are provided below with reference to FIG. 10 and FIG. 19. The first electronic device is the mobile phone 1, the second electronic device is the mobile phone 2, and the third electronic device is the mobile phone 3.

For the mobile phone 1, the first slot configuration information between the mobile phone 1 and the mobile phone 2 indicates that the slot 2, the slot 3, the slot 6, and the slot 7 are first data slots, and the slot 4 and the slot 5 are second data slots.

The second slot configuration information between the mobile phone 1 and the mobile phone 3 indicates that the slot 2 and the slot 7 are first data slots, and the slot 3 to the slot 6 are second data slots.

It can be learned that, based on the first slot configuration information and the second slot configuration information, a resource configuration conflict occurs between the slot 3 and the slot 6. In this case, according to a HiD2D mode priority, a union set of first data slots separately indicated by the first slot configuration information and the second slot configuration information is determined as a final first data slot of the mobile phone 1, including the slot 2, the slot 3, the slot 6, and the slot 7; and an intersection set of second data slots separately indicated by the first slot configuration information and the second slot configuration information is determined as a final second data slot of the mobile phone 1, including the slot 4 and the slot 5.

It may be understood that, to implement the foregoing functions, the electronic device includes corresponding hardware and/or software modules for performing the functions. The electronic device may be the first electronic device, the second electronic device, or the third electronic device. With reference to algorithms and steps in examples described in embodiments disclosed in this specification, this application can be implemented by hardware or a combination of hardware and computer software. Whether a function is performed by hardware or computer software driving hardware depends on a specific application and a design constraint condition of the technical solution. Persons skilled in the art may use different methods to implement the described functions for each specific application with reference to embodiments. However, it should not be considered that the implementation goes beyond the scope of this application.

In embodiments of this application, functional modules of the electronic device may be obtained through division based on the foregoing method examples. For example, each functional module may be obtained through division in correspondence to each function, or two or more functions may be integrated into one processing module. It should be noted that the module division in embodiments of this application is an example, and is merely logical function division. In actual implementation, there may be another division manner. It should be noted that a name of a module in embodiments of this application is an example, and the name of the module is not limited during actual implementation.

For example, FIG. 20 is a schematic diagram of a structure of a resource allocation apparatus in a Wi-Fi dual mode according to an embodiment of this application. The resource allocation apparatus in the Wi-Fi dual mode provided in this embodiment is configured to perform the resource allocation method in the Wi-Fi dual mode provided in the method embodiments of this application, and technical principles and technical effects are similar.

As shown in FIG. 20, the resource allocation apparatus in the Wi-Fi dual mode provided in this embodiment may be applied to a first electronic device, where the first electronic device uses a Wi-Fi direct mode and a STA mode to perform DBAC multiplexing, and the apparatus includes:
a first determining module 2001, configured to determine a first synchronization slot and a second synchronization slot in a plurality of slots included in a scheduling period of the Wi-Fi direct mode, where the slot is a time unit of the Wi-Fi direct mode, the first synchronization slot is used for time synchronization of the first electronic device in the Wi-Fi direct mode, and time corresponding to the second synchronization slot is used for time synchronization of the first electronic device in the STA mode; and
a second determining module 2002, configured to: determine a first data slot and a second data slot in remaining slots, where the remaining slots are slots other than the first synchronization slot and the second synchronization slot in the plurality of slots, the first data slot is used for data transmission of the first electronic device in the Wi-Fi direct mode, and time corresponding to the second data slot is used for data transmission of the first electronic device in the STA mode.

Optionally, the first determining module 2001 is configured to:
determine the first synchronization slot in the plurality of slots;
obtain offset time, where the offset time indicates a minimum time interval between a reference slot in the first synchronization slot and a start point of a beacon frame of the STA mode; and
determine the second synchronization slot in the plurality of slots based on the reference slot, the offset time, and a beacon period of the beacon frame, where the second synchronization slot is a slot to which the start point of the beacon frame belongs.

Optionally, the first synchronization slot includes first T slots in the plurality of slots, the reference slot is the 1^{st} slot in the first T slots, and T is a positive integer.

Optionally, the first determining module 2001 is configured to:
determine the 1^{st} second synchronization slot after the reference slot in the plurality of slots based on the reference slot and the offset time; and
continue to determine the second synchronization slot in the plurality of slots based on the 1^{st} second synchronization slot and the beacon period.

Optionally, the apparatus further includes a switching module, and the switching module is configured to:
determine whether a beacon frame sent by an AP is received within the time corresponding to the second synchronization slot; and
if no beacon frame sent by the AP is received within the time corresponding to the second synchronization slot, and no beacon frame sent by the AP is received within time corresponding to a preset quantity of consecutive second synchronization slots, switch from using the Wi-Fi direct mode and the STA mode to using the STA mode to perform DBAC multiplexing.

Optionally, the switching module is further configured to:
if no beacon frame sent by the AP is received within preset duration after the STA mode is used, switch from using the STA mode to using the Wi-Fi direct mode.

Optionally, preset duration=guard duration+beacon period of a beacon frame*I, where I is a positive integer.

Optionally, the second determining module 2002 is configured to:
obtain a ratio of a quantity of first data slots to a quantity of second data slots; and
determine the first data slot and the second data slot in the remaining slots based on the ratio of the slot quantities.

Optionally, the second determining module 2002 is configured to:
determine a quantity M of slots required when data transmission is performed by using only the Wi-Fi direct mode, and a quantity N of slots corresponding to time required when data transmission is performed by using only the STA mode, where both M and N are positive integers; and
determine the first data slot and the second data slot in the remaining slots based on M and N.

Optionally, the second determining module 2002 is configured to:
if M+N≤a quantity of the remaining slots, determine M slots in the remaining slots as the first data slot, and determine N slots other than the M slots in the remaining slots as the second data slot.

Optionally, if M+N<a quantity of the remaining slots, the second determining module 2002 is further configured to:
determine a slot other than the M slots and the N slots in the remaining slots as the first data slot or the second data slot.

Optionally, the second determining module 2002 is configured to:
if M+N>a quantity of the remaining slots, determine the first data slot and the second data slot in the remaining slots based on a preset scheduling rule, where the preset scheduling rule includes any one of the following: SP scheduling, RR scheduling, or WRR scheduling.

Optionally, the preset scheduling rule includes the SP scheduling, and the second determining module 2002 is configured to:
determine M slots in the remaining slots as the first data slot, and determine a slot other than the M slots in the remaining slots as the second data slot; or
determine N slots in the remaining slots as the second data slot, and determine a slot other than the N slots in the remaining slots as the first data slot.

Optionally, the preset scheduling rule includes the RR scheduling, and the second determining module 2002 is configured to:
determine M-(M+N-K)/2 slots in the remaining slots as the first data slot, and determine a slot other than the M-(M+N-K)/2 slots in the remaining slots as the second data slot, where K is the quantity of the remaining slots.

Optionally, the preset scheduling rule includes the WRR scheduling, and the second determining module 2002 is configured to:
determine M-(M+N-K)*q slots in the remaining slots as the first data slot, and determine a slot other than the M-(M+N-K)*q slots in the remaining slots as the second data slot, where K is the quantity of the remaining slots, and 0<q<1.

Optionally, the first electronic device uses the Wi-Fi direct mode to perform a first service with a second electronic device, and the first electronic device initiates the first service; and the second electronic device uses the Wi-Fi direct mode and the STA mode to perform DBAC multiplexing, and further includes a sending module, where the sending module is configured to:
send first slot configuration information to the second electronic device, where the first slot configuration information indicates locations of the first data slot and the second data slot in the scheduling period.

Optionally, the first electronic device uses the Wi-Fi direct mode to separately connect to a second electronic device and a third electronic device; both the second electronic device and the third electronic device use the Wi-Fi direct mode and the STA mode to perform DBAC multiplexing; and the second determining module 2002 is configured to:
obtain first slot configuration information between the first electronic device and the second electronic device and second slot configuration information between the first electronic device and the third electronic device, where the first slot configuration information indicates locations of the first data slot and the second data slot in the scheduling period when the first electronic device communicates with the second electronic device, and the second slot configuration information indicates locations of the first data slot and the second data slot in the scheduling period when the first electronic device communicates with the third electronic device; and
determine the first data slot and the second data slot in the remaining slots based on the first slot configuration information and the second slot configuration information.

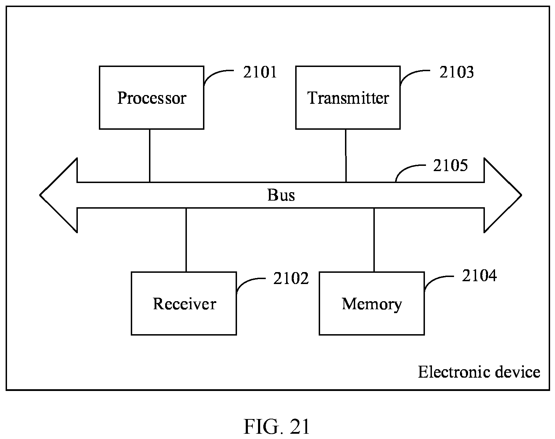

FIG. 21 shows a structure of an electronic device according to an embodiment of this application. The electronic device may be a first electronic device, a second electronic device, or a third electronic device. The electronic device includes a processor 2101, a receiver 2102, a transmitter 2103, a memory 2104, and a bus 2105. The processor 2101 includes one or more processing cores. The processor 2101 runs a software program and a module to perform various functional applications and information processing. The receiver 2102 and the transmitter 2103 may be implemented as a communication component, and the communication component may be a baseband chip. The memory 2104 is connected to the processor 2101 by using the bus 2105. The memory 2104 may be configured to store at least one program instruction, and the processor 2101 is configured to execute the at least one program instruction, to implement the technical solutions in the foregoing embodiments. Implementation principles and technical effects thereof are similar to those of the foregoing related method embodiments. Details are not described herein again.

After the electronic device is powered on, the processor may read the software program in the memory, explain and execute instructions of the software program, and process the data of the software program. When the processor needs to send data by using an antenna, after performing baseband processing on to-be-sent data, the processor outputs a baseband signal to a control circuit in the control circuit. The control circuit performs radio frequency processing on the baseband signal and then sends a radio frequency signal to the outside in a form of an electromagnetic wave by using the antenna. When data is sent to the electronic device, the control circuit receives the radio frequency signal by using the antenna, converts the radio frequency signal into the baseband signal, and outputs the baseband signal to the processor. The processor converts the baseband signal into data and processes the data.

Persons skilled in the art may understand that, for ease of description, FIG. 21 shows only one memory and only one processor. In an actual electronic device, there may be a plurality of processors and memories. The memory may also be referred to as a storage medium, an electronic storage device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. Persons skilled in the art may understand that the baseband processor and the central processing unit may be integrated into one processor, or may be independent processors, and are interconnected by using technologies such as a bus. Persons skilled in the art may understand that the electronic device may include a plurality of baseband processors to adapt to different network standards, and the electronic device may include a plurality of central processing units to enhance processing capabilities of the electronic device, and components of the electronic device may be connected by using various buses. The baseband processor may also be expressed as a baseband processing circuit or a baseband processing chip. The central processing unit may also be expressed as a central processing circuit or a central processing chip. A function of processing a communication protocol and the communication data may be built in the processor, or may be stored in the memory in a form of a software program, and the processor executes the software program to implement a baseband processing function. The memory may be integrated into the processor, or may be independent of the processor. The memory includes a cache cache, and may store frequently accessed data/instructions.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The method steps disclosed with reference to embodiments of this application may be directly performed by a hardware processor, or may be performed by a combination of hardware and software modules in the processor.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction structure or a data structure and that can be accessed by a computer, but is not limited thereto.

The memory in embodiments of this application may alternatively be a circuit or any other apparatus that can implement a storage function, and is configured to store program instructions and/or data. All or a part of the methods provided in embodiments of this application may be implemented by using software, hardware, firmware, or any combination thereof. When software is used for implementation, all or part of the implementation may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on an electronic device, the device is enabled to perform the technical solutions in the foregoing method embodiments. Implementation principles and technical effects thereof are similar to those of the foregoing related embodiments. Details are not described herein again.

An embodiment of this application provides a computer-readable storage medium. The computer-readable storage medium stores program instructions. When the program instructions are executed by an electronic device, the electronic device is enabled to perform the technical solutions in the foregoing embodiments. Implementation principles and technical effects thereof are similar to those of the foregoing related embodiments. Details are not described herein again.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A resource allocation method in a wireless fidelity Wi-Fi dual mode, applied to a first electronic device, wherein the first electronic device uses a Wi-Fi direct mode and a wireless station STA mode to perform dual band adaptive concurrent DBAC multiplexing, and the method comprises:
determining a first synchronization slot and a second synchronization slot in a plurality of slots comprised in a scheduling period of the Wi-Fi direct mode, wherein the slot is a time unit of the Wi-Fi direct mode, the first synchronization slot is used for time synchronization of the first electronic device in the Wi-Fi direct mode, and time corresponding to the second synchronization slot is used for time synchronization of the first electronic device in the STA mode; and
determining a first data slot and a second data slot in remaining slots, wherein the remaining slots are slots other than the first synchronization slot and the second synchronization slot in the plurality of slots, the first data slot is used for data transmission of the first electronic device in the Wi-Fi direct mode, and time corresponding to the second data slot is used for data transmission of the first electronic device in the STA mode.

2. The method according to claim 1, wherein the determining a first synchronization slot and a second synchronization slot in a plurality of slots comprised in a scheduling period of the Wi-Fi direct mode comprises:
determining the first synchronization slot in the plurality of slots;
obtaining offset time, wherein the offset time indicates a minimum time interval between a reference slot in the first synchronization slot and a start point of a beacon frame of the STA mode; and
determining the second synchronization slot in the plurality of slots based on the reference slot, the offset time, and a beacon period of the beacon frame, wherein the second synchronization slot is a slot to which the start point of the beacon frame belongs.

3. The method according to claim 2, wherein the first synchronization slot comprises first T slots in the plurality of slots, the reference slot is the 1^{st} slot in the first T slots, and T is a positive integer.

4. The method according to claim 2, wherein the determining the second synchronization slot in the plurality of slots based on the reference slot, the offset time, and a beacon period of the beacon frame comprises:
determining the 1^{st} second synchronization slot after the reference slot in the plurality of slots based on the reference slot and the offset time; and
continuing to determine the second synchronization slot in the plurality of slots based on the 1^{st} second synchronization slot and the beacon period.

5. The method according to any one of claims 1 to 4, further comprising:
determining whether a beacon frame sent by an access point AP is received within the time corresponding to the second synchronization slot; and
if no beacon frame sent by the AP is received within the time corresponding to the second synchronization slot, and no beacon frame sent by the AP is received within time corresponding to a preset quantity of consecutive second synchronization slots, switching from using the Wi-Fi direct mode and the STA mode to using the STA mode to perform DBAC multiplexing.

6. The method according to claim 5, further comprising:
if no beacon frame sent by the AP is received within preset duration after the STA mode is used, switching from using the STA mode to using the Wi-Fi direct mode.

7. The method according to any one of claims 1 to 6, wherein the determining a first data slot and a second data slot in remaining slots comprises:
obtaining a ratio of a quantity of first data slots to a quantity of second data slots; and
determining the first data slot and the second data slot in the remaining slots based on the ratio of the slot quantities.

8. The method according to any one of claims 1 to 6, wherein the determining a first data slot and a second data slot in remaining slots comprises:
determining a quantity M of slots required when data transmission is performed by using only the Wi-Fi direct mode, and a quantity N of slots corresponding to time required when data transmission is performed by using only the STA mode, wherein both M and N are positive integers; and
determining the first data slot and the second data slot in the remaining slots based on M and N.

9. The method according to claim 8, wherein the determining the first data slot and the second data slot in the remaining slots based on M and N comprises:
if M+N≤a quantity of the remaining slots, determining M slots in the remaining slots as the first data slot, and determining N slots other than the M slots in the remaining slots as the second data slot.

10. The method according to claim 8, wherein the determining the first data slot and the second data slot in the remaining slots based on M and N comprises:
if M+N>a quantity of the remaining slots, determining the first data slot and the second data slot in the remaining slots based on a preset scheduling rule, wherein the preset scheduling rule comprises any one of the following: strict priority SP scheduling, round robin RR scheduling, or weighted round robin WRR scheduling.

11. The method according to claim 10, wherein the preset scheduling rule comprises the SP scheduling, and the determining the first data slot and the second data slot in the remaining slots based on a preset scheduling rule comprises:
determining M slots in the remaining slots as the first data slot, and determining a slot other than the M slots in the remaining slots as the second data slot; or
determining N slots in the remaining slots as the second data slot, and determining a slot other than the N slots in the remaining slots as the first data slot.

12. The method according to claim 10, wherein the preset scheduling rule comprises the RR scheduling, and the determining the first data slot and the second data slot in the remaining slots based on a preset scheduling rule comprises:
determining M-(M+N-K)/2 slots in the remaining slots as the first data slot, and determining a slot other than the M-(M+N-K)/2 slots in the remaining slots as the second data slot, wherein K is the quantity of the remaining slots.

13. The method according to claim 10, wherein the preset scheduling rule comprises the WRR scheduling, and the determining the first data slot and the second data slot in the remaining slots based on a preset scheduling rule comprises:
determining M-(M+N-K)*q slots in the remaining slots as the first data slot, and determining a slot other than the M-(M+N-K)*q slots in the remaining slots as the second data slot, wherein K is the quantity of the remaining slots, and 0<q<1.

14. The method according to any one of claims 1 to 13, wherein the first electronic device uses the Wi-Fi direct mode to perform a first service with a second electronic device, and the first electronic device initiates the first service; the second electronic device uses the Wi-Fi direct mode and the STA mode to perform DBAC multiplexing; and the method further comprises:
sending first slot configuration information to the second electronic device, wherein the first slot configuration information indicates locations of the first data slot and the second data slot in the scheduling period.

15. The method according to any one of claims 1 to 13, wherein the first electronic device uses the Wi-Fi direct mode to separately connect to a second electronic device and a third electronic device; both the second electronic device and the third electronic device use the Wi-Fi direct mode and the STA mode to perform DBAC multiplexing; and the determining a first data slot and a second data slot in remaining slots comprises:
obtaining first slot configuration information between the first electronic device and the second electronic device and second slot configuration information between the first electronic device and the third electronic device, wherein the first slot configuration information indicates locations of the first data slot and the second data slot in the scheduling period when the first electronic device communicates with the second electronic device, and the second slot configuration information indicates locations of the first data slot and the second data slot in the scheduling period when the first electronic device communicates with the third electronic device; and
determining the first data slot and the second data slot in the remaining slots based on the first slot configuration information and the second slot configuration information.

16. An electronic device, wherein the electronic device comprises a processor, and the processor is configured to: be coupled to a memory, read instructions in the memory, and enable, based on the instructions, the electronic device to perform the method according to any one of claims 1 to 15.

17. A computer-readable storage medium, wherein the computer-readable storage medium stores computer instructions, and when the computer instructions are run on an electronic device, the electronic device is enabled to perform the method according to any one of claims 1 to 15.
